(19) Europäisches Patentamt
European Patent Office
Office européen des brevets

(11) **EP 1 666 942 A1**

(12) **EUROPEAN PATENT APPLICATION**
published in accordance with Art. 158(3) EPC

(43) Date of publication:
07.06.2006 Bulletin 2006/23

(51) Int Cl.:
*G02B 6/36* (1985.01)

(21) Application number: 04771325.0

(22) Date of filing: 30.07.2004

(86) International application number:
PCT/JP2004/011324

(87) International publication number:
WO 2005/012969 (10.02.2005 Gazette 2005/06)

(84) Designated Contracting States:
CH GB IT LI NL

(30) Priority: 31.07.2003 JP 2003205211
25.08.2003 JP 2003300656
24.09.2003 JP 2003332305
25.11.2003 JP 2003394816

(71) Applicant: KYOCERA CORPORATION
Kyoto-shi, Kyoto 612-8501 (JP)

(72) Inventors:
• KOBAYASHI, Yoshihiro,
c/o KYOCERA CORPORATION
Houchi, Kitami-shi, Hokkaido 099-1595 (JP)
• TANAKA, Masahiro,
c/o KYOCERA CORPORATION
Kokubu-shi, Kagoshima 899-4312 (JP)

(74) Representative: Banzer, Hans-Jörg et al
Kraus & Weisert
Patent- und Rechtsanwälte
Thomas-Wimmer-Ring 15
D-80539 München (DE)

(54) **OPTICAL CONNECTOR CONNECTION LOSS CALCULATION METHOD AND SIMULATOR USING THE SAME**

(57) A method for estimating connection loss of an optical connector, according to the present invention, the optical connector including a ferrule, which has a through-hole along the longitudinal direction, and an optical fiber which is inserted and fixed into the ferrule, includes steps of: calculating axial misalignment based on both of at least distribution data of dimension parameters of the ferrule and at least distribution data of dimension parameters of the optical fiber; calculating connection loss based on the axial misalignment; and simulating distribution of the connection loss.

By using these approaches, distribution data of connection loss of optical connectors can be easily obtained in no need of a large number of man-hours and costs.

*Fig.1*

**Description**

TECHNICAL FIELD

The present invention relates to a method for estimating by simulation distribution data of values of connection loss of optical connectors used for optical communications, and to a simulator using the method.

BACKGROUND

Recently, for increasing volume of information in communications, optical communications with optical fibers have been used. In the optical communications, an optical connector is used for connecting the optical fibers with each other.

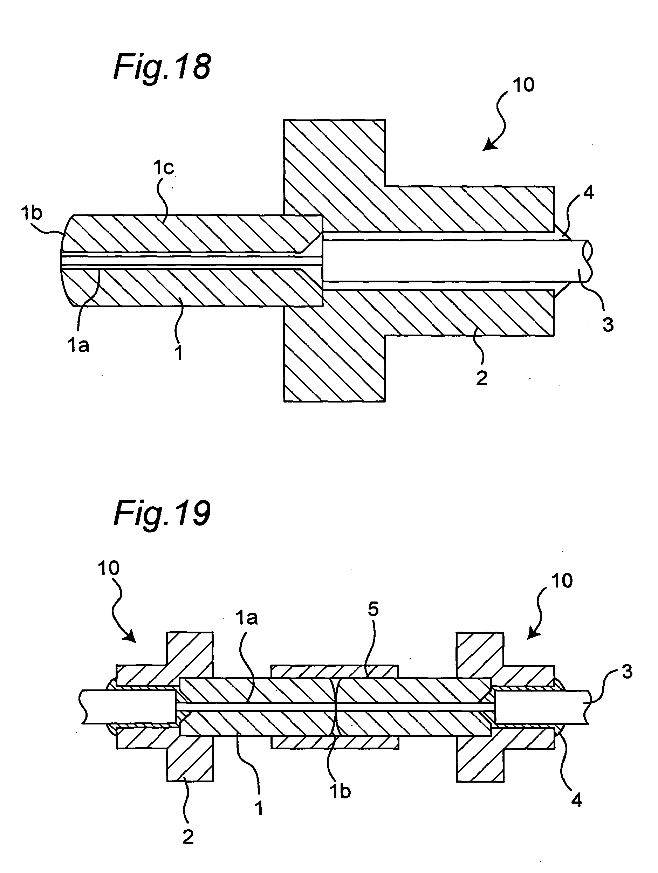

A plug 10, which is used for the optical connector, a tubular ferrule 1 is fixed beforehand with an optical fiber protector 2, as shown in Figs. 18 and 19, and a jacketless front tip of an optical fiber 3 is inserted and fixed using adhesives into a through-hole 1a formed in the ferrule 1. A pair of the ferrules 1 is inserted into both sides of a sleeve 5. Front end faces 1b of the ferrules 1, which are polished in convex spherical shapes, are made in contact with each other inside the sleeve 5.

Optical characteristics of the above-mentioned optical connector is measured after assembling the optical connector to guarantee optical connection with low loss and low reflection. The measuring items includes connection loss exhibiting optical transmittance and return loss exhibiting optical reflectance at the connection portion of the optical connector, and at present these connection loss and the return loss are separately and manually measured.

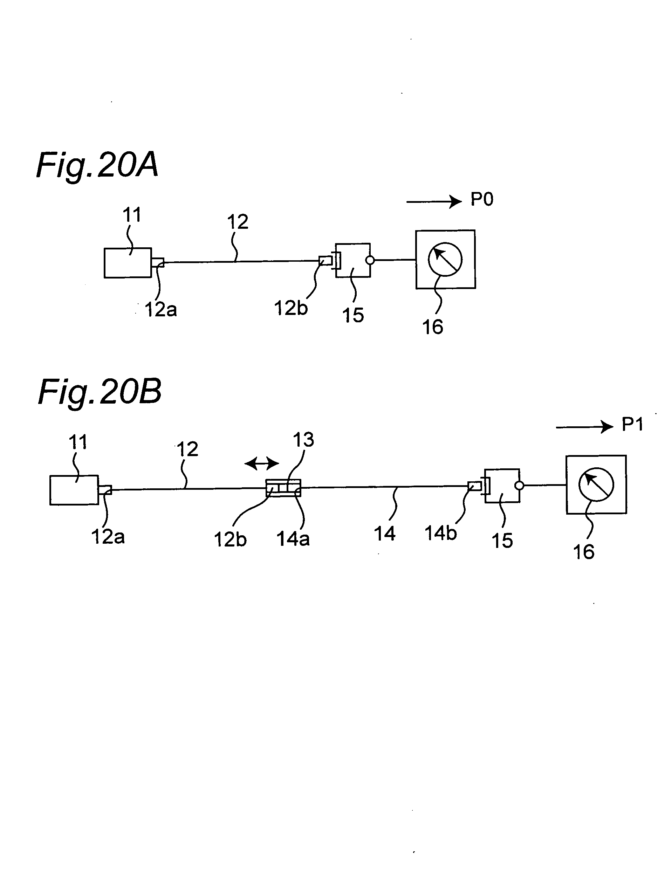

Figs. 20A and 20B are diagrams showing measurement of random connection loss of an optical connector. In the drawings, an LD light source 11, a reference optical cord 12, an optical connector 12a, a reference optical connector 12b, an adapter 13, an optical cord 14 to be measured with optical connectors attached on both edges, the optical connector 14a as a measuring object, the optical connector 14b on the termination side, a light receiving unit 15, and a power meter 16 are provided.

Here, the reference optical connector 12b, which is an optical connector with specifications identical to those of the optical connectors 14a and 14b as measuring objects, is usually used by randomly picking up it among the same production lot as the optical connector to be measured.

First, prior to measurement of connection loss of the optical connector, a reference of connection loss is set up in the measurement shown in Fig. 20A. The optical connector 12a on one end of the reference optical cord 12 is connected to the LD light source 11, and the reference optical connector 12b is connected to the light receiving unit 15. Exit light coming from the reference optical connector 12b is received via an air layer by the light receiving unit 15. Exit power P0 from this reference optical connector 12b can be read using the power meter 16. This value is defined as a reference value for the connection measurement, i.e., connection loss of 0 dB.

Next, in order to measure the connection loss of the optical connector 14a as a measuring object, the reference optical connector 12b is disconnected from the light receiving unit 15, to which the optical cord 14 to be measured is connected via the adapter 13, as shown in Fig. 20B. Exit light coming from the optical connector 14b is received via an air layer by the light receiving unit 15, similarly to measurement of the reference value. In this case, exit power P1 is measured using the power meter 16 (ref. Japanese Examined Patent Publication 3,323,919).

Connection loss IL at a connection portion of an optical connector can be represented as the following equation, using said exit power P0, said exit power P1, transmission loss $\alpha$ (dB/Km) of an optical fiber, and reflection loss $\beta$ at the end face of the optical connector.

(Equation 1)

$$IL(dB) = -10\log\frac{P1}{P0} - \alpha - \beta$$

Here, reflection at the end face of the optical connector is usually 0.01% or below and the reflection loss $\beta$ can be negligible because it is under resolution of the measuring instrument. Furthermore, in case of a single-mode optical fiber, the transmission loss $\alpha$ is 0.35 dB/Km or below. Therefore, in a case the optical cord to be measured has a length of 30m or shorter, the transmission loss $\alpha$ can be negligible because it is approximately 0.01 dB as much as the resolution of the measuring instrument. In another case of the length of 30m or over, the transmission loss ($\alpha$/m) of the optical fiber can be measured or calculated beforehand. Accordingly, in both cases, the connection loss IL of the optical connector can be simply obtained by using the equation 1.

For factors of connection loss in an optical connector, considered are axial misalignment between cores of optical fibers, orientation error between optical fibers, end face gap between optical connectors, inconformity in structure between optical fibers, and the like. In a general case of a single-mode optical fiber, axial misalignment between cores of optical fibers (referring to as "misalignment" hereinafter) is a primary factor.

A main factor of the misalignment results from accuracy of machining the through-hole 1a of the ferrule 1. But when an eccentric dimension which is required by a general single-mode optical connector is in a range of approximately 0.7 $\mu$m or below, practical connection loss exhibits little correlation with a measurement of eccentricity of the through-hole 1a, since the eccentricity between the cores of the optical fibers does not always coincide with the eccentricity between the through-holes 1a. In other words, a clearance of approximately 1 $\mu$m is required between the through-hole 1a of the optical connector and the optical fiber inserted into the through-hole 1a, and the optical fiber itself has a slight eccentricity of the core from a center of the outer diameter. Therefore, even if the through-holes 1a has no eccentricity, the misalignment may occur.

Here, in case of connection of optical connectors for single-mode optical fibers, insertion loss IL (db) due to a misalignment d between optical fibers can be represented as the following equation, by measuring eccentricity of the core of the optical fiber 3 from a center of the outer surface of the ferrule 1 in each of the optical connectors.

(Equation 2)

$$IL_{\Delta}(dB) = -10log\left\{exp\left[-\left(d/\omega\right)^2\right]\right\}$$

wherein $\omega$ is a radius of mode field of the optical fiber. This equation can be developed into the following equation.

(Equation 3)

$$IL_{\Delta}(dB) = 4.34\left(d/\omega\right)^2$$

Here, if suppose $\omega$ = 4.7 $\mu$m, the insertion loss $IL_{\Delta}$ (dB) due to the misalignment d between optical fibers is approximately 0.05 dB with the misalignment d of 0.5 $\mu$m, approximately 0.20 dB with the misalignment d of 1 $\mu$m, approximately 0.79 dB with the misalignment d of 2 $\mu$m, respectively. Accordingly, as the misalignment between the optical fibers is larger, a change of the connection loss is further increased.

For an approach for suppressing the increase of the connection loss due to misalignment, a connection method of so-called "tuning" is known. While performing a connection test of every plug with one master plug, and then turning the plug around the axis by 90 degree to find a direction with the least connection loss among four directions, and then the plug is marked so as to designate the particular direction. In case of practical connection, the plugs are connected with each other so that the marks thereof coincide with each other, thereby each direction of misalignment of the two plugs connected may reside in the same 90-degree range, so that the mutual misalignment can be canceled out to some extent, thereby suppressing the increase of the connection loss. A typical tuning is aiming to have the plugs reside in the same 90-degree range, and one direction is chosen among four directions, therefore, here it can be called 4-phase tuning. A general tuning, which can confine misalignment within a range of (360/m) degree, using a natural number m, can be called m-phase tuning.

Next, a main factor of orientation error between optical fibers (referring to as "orientation error" hereinafter) results from angular misalignment of the through-hole 1a with respect to an outer surface 1c of the ferrule 1. Here, insertion loss $IL_{\theta}$ (dB) of the optical connector can be represented as the following equation, using an orientation error $\theta$ of an exit angle of the optical fiber 3 with respect to the outer surface 1c.

(Equation 4)

$$IL_{\theta}(dB) = -10log\left\{exp\left[-\left(\pi n\theta\omega/\lambda\right)^2\right]\right\}$$

wherein n is a refractive index of the optical fiber, and $\lambda$ is a wavelength of light in vacuum. This equation can be developed into the following equation by substituting a typical refractive index 1.46 of an optical fiber for n.

(Equation 5)

$$IL_\theta(dB) = 91.4(\theta\omega/\lambda)^2$$

Here, the insertion loss $IL_\theta$ (dB) due to the orientation error θ between optical fibers is approximately 0.014 dB with the orientation error θ of 0.2 degree, approximately 0.089 dB with the orientation error θ of 0.5 degree, respectively. Accordingly, as the orientation error θ is larger, a change of the connection loss is further increased, however, with less influence than the connection loss due to misalignment d.

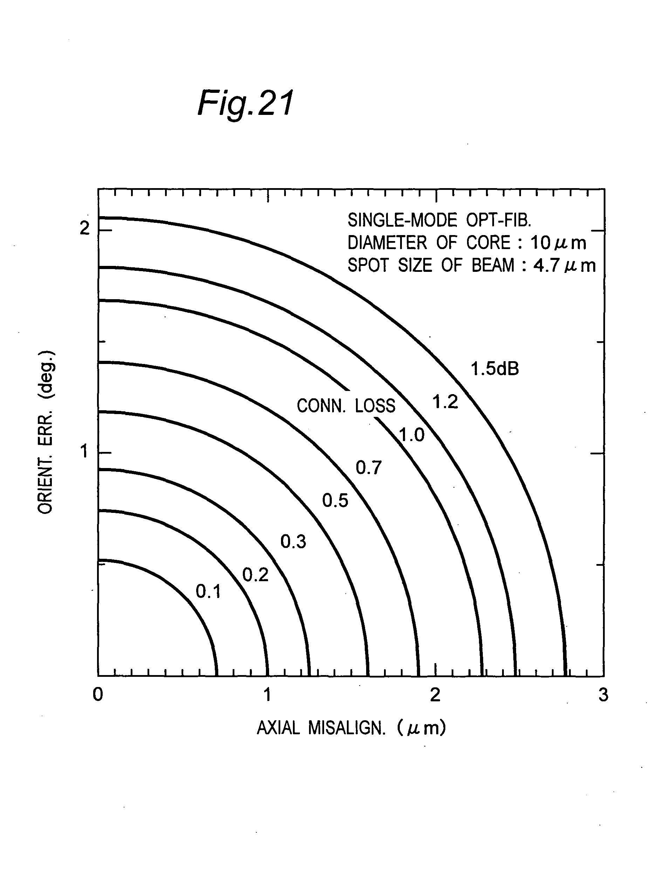

According to the Equations 1 and 2, as shown in Fig. 21, a graph indicating misalignment, orientation error and connection loss was simply used, so that rough connection loss could be estimated based on orientation error and misalignment of respective optical connectors (ref. "Optical Circuit For Single Mode Fiber", Section 3.1, NTT Electrical Communications Laboratories Technical Journal, Vol. 32, No. 3, pp. 675, 1983).

In the conventional method of estimating connection loss, however, since misalignment can be caused by complicated factors, such as eccentricity of the ferrule, difference in diameter between the through-hole 1a of the ferrule and the optical fiber, coaxiality of a core of the optical fiber, it must be measured how the core of the optical fiber is decentered from the center of the outer surface after the optical fiber is fixed using adhesives to the ferrule. Further, in case of orientation error, it must be measured how the longitudinal direction of the optical fiber is tilted to the outer surface, i.e., an exit angle of light outgoing from the front end of the optical fiber, after the optical fiber is fixed using adhesives to the ferrule. The connection loss could not be estimated without the above-mentioned measurement.

In other words, every sample must be actually assembled and measured, resulting in consumption of a large number of man-hours for preparing samples and measuring misalignment and orientation error thereof.

Further, if samples are actually assembled, actual measurement value can be obtained by directly measuring connection loss, without respective measurement of an exit angle and misalignment. But in any case it takes a large number of man-hours to measure connection loss.

Furthermore, misalignment and orientation error measured by the conventional method are much complicated by dimension parameters of the optical fiber and the ferrule, hence it is hard to analogize how and what parameter has an influence on connection loss.

DISCLOSURE OF THE INVENTION

An object of the present invention is to provide a method for estimating connection loss of an optical connector and a simulator using the method, by which distribution data of values of connection loss of the optical connector can be easily obtained in no need of a large number of man-hours and costs.

A method for estimating connection loss of an optical connector, according to the present invention, the optical connector including a ferrule, which has a through-hole along the longitudinal direction, and an optical fiber which is inserted and fixed into the ferrule, includes steps of:

calculating axial misalignment based on both of at least distribution data of dimension parameters of the ferrule and at least distribution data of dimension parameters of the optical fiber;
calculating connection loss based on the axial misalignment; and
simulating distribution of the connection loss.

It is preferable in the present invention that the distribution of the connection loss is simulated by randomly extracting particular data out of both of at least distribution data of dimension parameters of the ferrule and at least distribution data of dimension parameters of the optical fiber, and then calculating the axial misalignment based on combination thereof, and then calculating connection loss based on the axial misalignment to obtain a plurality of connection loss data.

Further, it is preferable in the present invention that, in the simulator for estimating connection loss, distribution data of angle parameters, which represents orientation error of the through-hole of the ferrule with respect to an outer surface thereof, reside in the combination.

Further, it is preferable in the present invention that, in the simulator for estimating connection loss, distribution data of either dimension parameters or angle parameters of a split sleeve, or distribution data of connection loss of a split sleeve reside in the combination.

Further, it is preferable in the present invention that, the axial misalignment is calculated based on clearance caused between an inner diameter of the ferrule and an outer diameter of the optical fiber, and coaxiality between the outer surface and the through-hole of the ferrule, and coaxiality between a core and a clad of the optical fiber.

Further, it is preferable in the present invention that, the distribution of the connection loss is simulated by calculating the axial misalignment as single-plug axial misalignment, based on clearance caused between an inner diameter of the ferrule and an outer diameter of the optical fiber, and coaxiality between the outer surface and the through-hole of the ferrule, and coaxiality between a core and a clad of the optical fiber, and then calculating paired axial misalignment using two data of the single-plug axial misalignment with axial misalignment due to a difference in outer diameter of the ferrule, and then calculating connection loss based on the paired axial misalignment.

Further, it is preferable in the present invention that, the distribution of the connection loss is simulated by obtaining the total connection loss that is the sum of the connection loss calculated based on the paired axial misalignment, connection loss calculated based on paired orientation error, and the connection loss of the split sleeve.

In addition, a method for estimating connection loss of an optical connector, according to the present invention, includes steps of:

> calculating each axial misalignment based on distribution data of dimension parameters of both of a hollow cylindrical single-core ferrule and an optical fiber inserted thereinto, and/or orientation error based on distribution data of angle parameters of a ferrule;
> calculating the sum of the axial misalignments and/or the orientation errors in terms of vector quantity in a plane perpendicular to an axial direction of the optical fiber and the ferrule;
> calculating distribution of axial misalignment and/or orientation error in a connection state; and
> calculating distribution of connection loss.

In other words, the present invention can calculate the sum of either the axial misalignments or the orientation errors, or both of them, in terms of vector quantity in a plane perpendicular to the axial direction.

Further, it is preferable in the present invention that, when the distribution of axial misalignment resulting from both of distribution data of dimension parameters of the ferrule and distribution data of dimension parameters of the optical fiber, and/or the distribution of orientation error resulting from distribution data of angle parameters of the ferrule are summed in terms of vector, an angle between two vectors of misalignment or orientation error to be summed is variable-transformed into a magnitude of a summed vector of misalignment or orientation error.

Further, it is preferable in the present invention that, distribution data of either dimension parameters or angle parameters of a split sleeve, or distribution data of connection loss of a split sleeve are combined.

Further, it is preferable in the present invention that, the axial misalignment is calculated based on clearance caused between an inner diameter of the ferrule and an outer diameter of the optical fiber, and coaxiality between the outer surface and the through-hole of the ferrule, and coaxiality between a core and a clad of the optical fiber.

Further, it is preferable in the present invention that, the distribution of the connection loss is calculated by calculating distribution of single-plug axial misalignment by summing in terms of vector distribution of clearance caused between an inner diameter of the ferrule and an outer diameter of the optical fiber, distribution of coaxiality between the outer surface and the through-hole of the ferrule, and distribution of coaxiality between a core and a clad of the optical fiber, and then calculating paired distribution of axial misalignment by summing in terms of vector two distribution of the single-plug axial misalignment with distribution of difference in outer diameter of the ferrule, and then calculating distribution of connection loss based on the paired distribution of axial misalignment.

Further, it is preferable in the present invention that, the orientation error is calculated based on a tilt of the longitudinal direction of the through-hole of the ferrule to the outer surface thereof.

Further, it is preferable in the present invention that, the distribution of connection loss is calculated based on the paired distribution of orientation error which is calculated by summing in terms of vector two distribution of orientation error of the ferrule.

Further, it is preferable in the present invention that, the distribution of the connection loss is calculated by obtaining the total connection loss that is the sum of the connection loss calculated based on the paired axial misalignment, connection loss calculated based on paired orientation error, and the connection loss of the split sleeve.

In addition, a method for estimating connection loss of an optical connector, according to the present invention, includes steps of:

> calculating each axial misalignment based on distribution data of dimension parameters of both of a hollow cylindrical single-core ferrule and an optical fiber inserted thereinto, and/or orientation error based on distribution data of angle parameters of the ferrule;
> calculating the sum of the axial misalignments and/or the orientation errors in terms of vector quantity in a plane perpendicular to an axial direction of the optical fiber and the ferrule;
> calculating the n-th moment of axial misalignment and/or orientation error in a connection state; and
> calculating the n-th moment of connection loss.

In other words, the present invention can calculate the sum of either the axial misalignments or the orientation errors, or both of them, in terms of vector quantity in a plane perpendicular to the axial direction.

Further, it is preferable in the present invention that, an average is calculated based on the 1st moment of connection loss, and a standard deviation or a variance is calculated based on the 1st and 2nd moments of connection loss.

Further, it is preferable in the present invention that, distribution data of either dimension parameters or angle parameters of a split sleeve, or distribution data of connection loss of a split sleeve are combined.

Further, it is preferable in the present invention that, the axial misalignment is calculated based on clearance caused between an inner diameter of the ferrule and an outer diameter of the optical fiber, and coaxiality between the outer surface and the through-hole of the ferrule, and coaxiality between a core and a clad of the optical fiber.

Further, it is preferable in the present invention that, the n-th moment of the connection loss is calculated by calculating the n-th moment of single-plug axial misalignment by summing in terms of vector the n-th moment of clearance caused between an inner diameter of the ferrule and an outer diameter of the optical fiber, the n-th moment of coaxiality between the outer surface and the through-hole of the ferrule, and the n-th moment of coaxiality between a core and a clad of the optical fiber, and then calculating the paired n-th moment of axial misalignment by summing in terms of vector the two n-th moments of the single-plug axial misalignment with the n-th moment of difference in outer diameter of the ferrule, and then calculating the n-th moment of connection loss based on the paired n-th moment of axial misalignment.

Further, it is preferable in the present invention that, the orientation error is calculated based on a tilt of the longitudinal direction of the through-hole of the ferrule to the outer surface thereof.

Further, it is preferable in the present invention that, the n-th moment of connection loss is calculated based on the paired n-th moment of orientation error which is calculated by summing in terms of vector the two n-th moments of orientation error of the ferrule.

Further, it is preferable in the present invention that, the n-th moment of the connection loss is calculated by obtaining total connection loss that is the sum of the connection loss calculated based on the paired axial misalignment, connection loss calculated based on paired orientation error, and the connection loss of the split sleeve.

In addition, a method for estimating connection loss of an optical connector, according to the present invention, includes steps of:

performing tuning, that is a method for aligning a misaligned direction of a single plug, which includes a ferrule having a through-hole along the longitudinal direction, and an optical fiber inserted thereinto, based on both of distribution data of axial misalignment of the single plug and distribution data of a diameter of the ferrule;

calculating the n-th moment of axial misalignment and/or orientation error in the tuned connection state; and

calculating the n-th moment of connection loss.

Further, it is preferable in the present invention that, an average is calculated based on the 1st moment of connection loss, and a standard deviation or a variance is calculated based on the 1st and 2nd moments of connection loss.

Further, it is preferable in the present invention that, distribution data of either dimension parameters or angle parameters of a split sleeve, or distribution data of connection loss of a split sleeve are combined.

Further, it is preferable in the present invention that, the axial misalignment is calculated based on clearance caused between an inner diameter of the ferrule and an outer diameter of the optical fiber, and coaxiality between the outer surface and the through-hole of the ferrule, and coaxiality between a core and a clad of the optical fiber.

Further, it is preferable in the present invention that, the orientation error is calculated based on a tilt of the longitudinal direction of the through-hole of the ferrule to the outer surface thereof.

Further, it is preferable in the present invention that, the n-th moment of connection loss is calculated based on the paired n-th moment of orientation error which is calculated by summing in terms of vector the two n-th moments of orientation error of the ferrule.

Further, it is preferable in the present invention that, the n-th moment of the connection loss is calculated by obtaining the total connection loss that is the sum of the connection loss calculated based on the paired axial misalignment, connection loss calculated based on paired orientation error, and the connection loss of the split sleeve.

In addition, a simulator for estimating connection loss of an optical connector, according to the present invention, can be realized using combination of one or more selected from the above-described methods for estimating connection loss of an optical connector.

By using these approaches, distribution data of connection loss of optical connectors can be easily obtained in no need of a large number of man-hours and costs.

BRIEF DESCRIPTION OF DRAWINGS

Fig. 1 a flow chart showing an operation of a simulator for estimating connection loss, in a first embodiment according to the present invention.

Fig. 2A is a cross-sectional view for explaining axial misalignment of a single plug. Fig. 2B is an enlarged view from the end face direction of a ferrule in Fig. 2A.

Fig. 3A is a cross-sectional view for explaining axial misalignment in a paired state of two plugs in contact. Fig. 3B is an enlarged view showing the misalignment on the contact plane of the ferrules.

Fig. 4A is a cross-sectional view for explaining orientation error in a paired state of two plugs in contact. Fig. 4B is an three-dimensional diagram representing the orientation error in polar coordinates.

Fig. 5 is a diagram for explaining a method for randomly extracting one datum among distribution data of various parameters.

Fig. 6 is a diagram for explaining a method for randomly extracting one angular datum among 360-degree directions.

Fig. 7 is a diagram for explaining a method for combining a plurality of data.

Fig. 8 is a histogram showing a result obtained by the simulator for estimating connection loss, according to the first embodiment.

Fig. 9 is a flow chart showing an operation of a simulator for estimating connection loss, in a second embodiment according to the present invention.

Fig. 10 is a diagram for explaining a method for synthesizing distribution of dimension parameters.

Fig. 11 is a diagram for explaining a method for calculating distribution of total connection loss by summing distribution of connection loss due to misalignment, distribution of connection loss due to orientation error, and distribution of connection loss of a split sleeve.

Fig. 12 is a histogram showing a result obtained by the simulator for estimating connection loss, according to the second embodiment.

Fig. 13 is a flow chart showing an operation of a simulator for estimating connection loss, in a third embodiment according to the present invention.

Fig. 14 is a flow chart showing an operation of a simulator for estimating connection loss, in a fourth embodiment according to the present invention.

Fig. 15A is a cross-sectional view for explaining axial misalignment in a paired state by tuning two plugs in contact. Fig. 15B is an enlarged view showing the misalignment on the contact plane of the ferrules.

Fig. 16 a diagram for explaining a method for synthesizing the n-th moment of dimension parameters in case of 4-phase tuning.

Fig. 17A is a graph showing distribution of axial misalignment of single-plugs and distribution of difference in outer diameter of ferrules. Fig. 17B is a graph showing relation between the number of phases of tuning and an average and a standard deviation of connection loss.

Fig. 18 is a cross-sectional view showing a typical plug.

Fig. 19 is a cross-sectional view showing a typical optical connector.

Figs. 20A and 20B are explanatory diagrams showing a method for measuring connection loss of an optical connector.

Fig. 21 is a graph showing axial misalignment, orientation error and connection loss.

[BEST EMBODIMENT FOR CARRYING OUT THE INVENTION]

Embodiments according to the present invention will be described below with reference to the drawings.

(Embodiment 1)

In an optical connector including a ferrule, which has a through-hole along the longitudinal direction, and an optical fiber which is inserted and fixed into the ferrule, this embodiment includes steps of: calculating axial misalignment based on both of at least distribution data of dimension parameters of the ferrule and at least distribution data of dimension parameters of the optical fiber; calculating connection loss based on the axial misalignment; and simulating a distribution of connection loss.

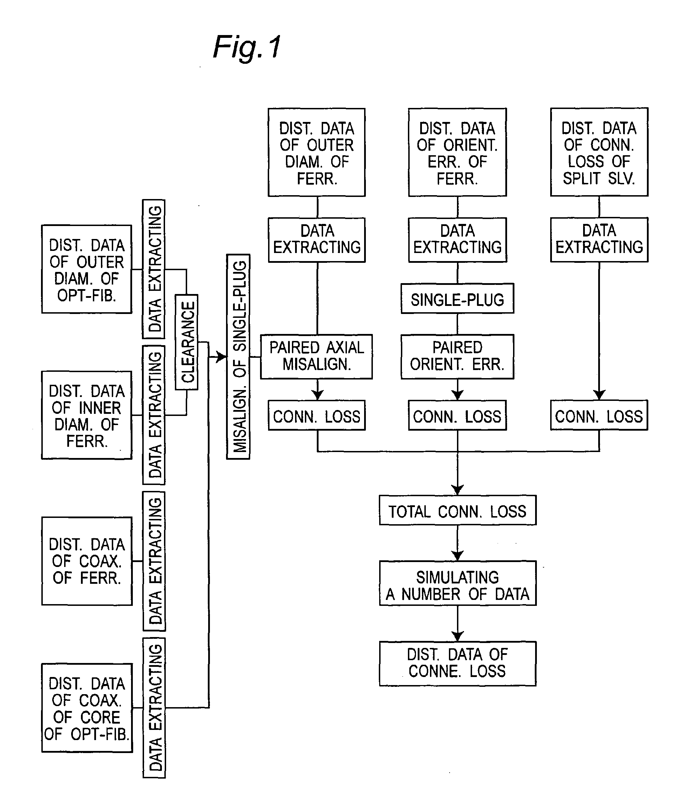

As an example of the present invention, Fig. 1 shows a method for simulating distribution of connection loss of an optical connector including a hollow cylindrical single-core ferrule, by means of Monte Carlo method.

First, one datum is extracted among distribution data of outer diameter of optical fibers, which have been prepared in advance. Data extraction is performed using random number generation. Because of usage of random number, this method is called Monte Carlo, Monaco, famous as a gambling place. Specifically, it is relatively easy to obtain random numbers using a random number table, or a personal computer, such as a random number generating function RAND() or RANDBETWEEN() in "Excel", spreadsheet software supplied by Microsoft. Details of such data extraction will be described below.

Next, one datum is randomly extracted among distribution data of inner diameter of ferrules in the same manner as above. Here, since the outer surface of an optical fiber surely comes in contact with the inner surface of a ferrule on at least one point in an end face of the ferrule, a clearance between the inner diameter of the ferrule and the out diameter of the optical fiber, i.e., half of a value of the outer diameter of the optical fiber subtracted from the inner diameter of the ferrule, means axial misalignment.

Next, one datum is randomly extracted among distribution data of coaxiality of ferrules in the same manner as above. Further, one datum is randomly extracted among distribution data of coaxiality of core of optical fibers in the same manner as above.

Total axial misalignment of a single plug is calculated based on the above-described half value of the outer diameter of the optical fiber subtracted from the inner diameter of the ferrule, coaxiality of ferrules and coaxiality of core of optical fibers.

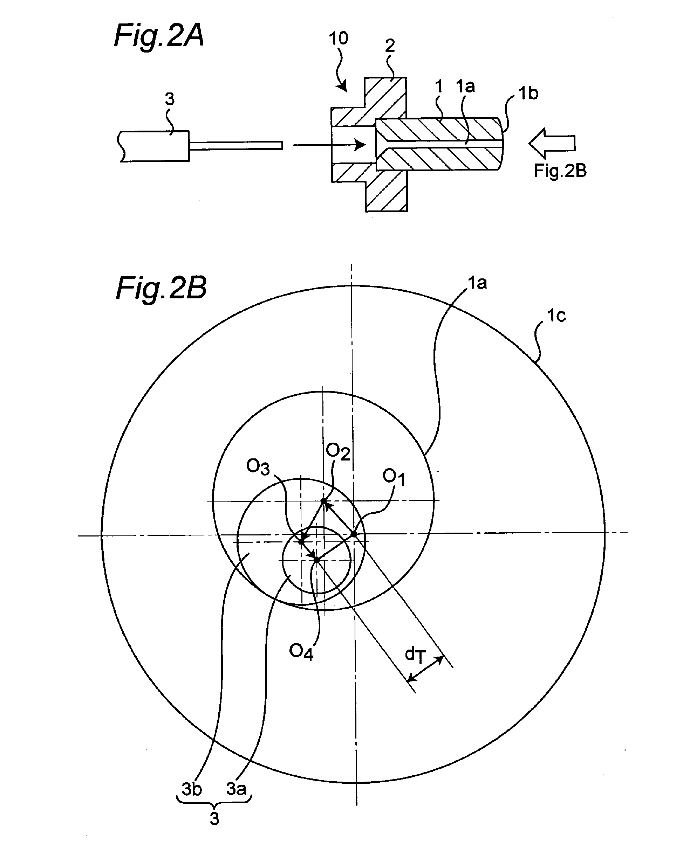

In Fig. 2A, an optical fiber protector 2 is fixed to a ferrule 1 having a through-hole 1a, and an optical fiber 3 is inserted and fixed into an opening of the optical fiber protector 2, thereby forming a plug 10. Axial misalignment means displacement from the center of an outer surface 1c in an end face 1b of the ferrule. Fig. 2B is an enlarged view from the end face direction of the ferrule 1.

Here, defining the center of the outer surface 1c as $O_1$, the center of the through-hole of the ferrule as $O_2$, respectively, displacement of $O_2$ means half value of coaxiality. Next, defining the center of the optical fiber as $O_3$, a distance between $O_2$ and $O_3$ means half of a value of the outer diameter of the optical fiber subtracted from the inner diameter of the ferrule. Further, defining the center of core of the optical fiber as $O_4$, a distance between $O_3$ and $O_4$ means half value of coaxiality of core of the optical fiber. Finally, a distance between $O_1$ and $O_4$ means total axial misalignment $d_T$ relative to the outer surface 1c of the ferrule.

Then, since one axial misalignment for each parameter depends on a misalignment angle among 360-degree directions, even if axial misalignment for each parameter is large, the total axial misalignment is not always large.

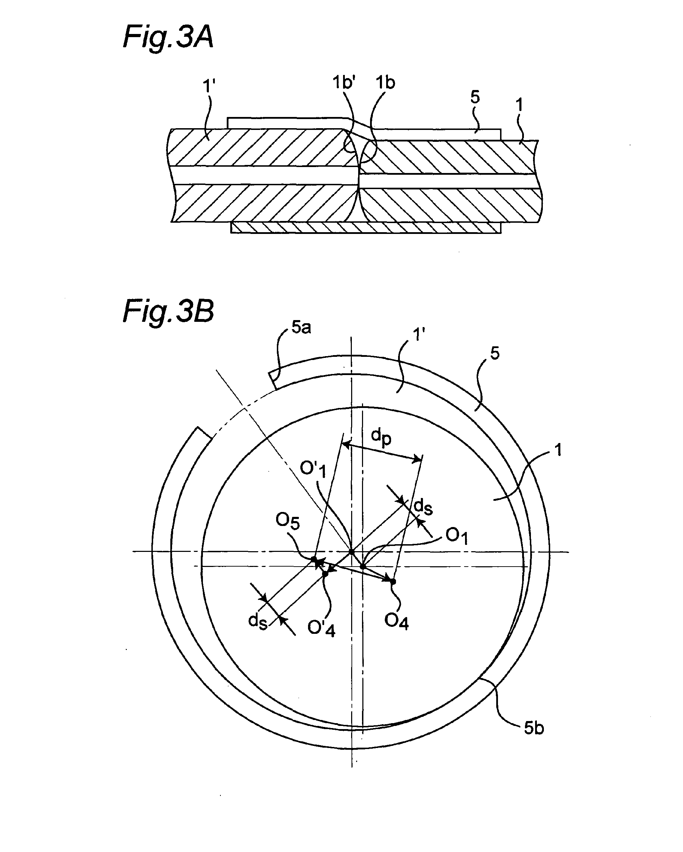

As described above, axial misalignment of the single plug can be calculated. However, it must be calculated on condition of a pair of plugs being in contact with each other for an optical connector. Hence, a method for calculating the paired axial misalignment will be described below using Figs. 3A and 3B.

Fig. 3A shows a state of the ferrule 1 in contact with another ferrule 1', in which end faces 1b and 1b' come in contact with each other by a split sleeve 5.

Here, as shown in Fig. 3B, an inner surface of an opposite portion 5b to a slit 5a of the split sleeve 5 constitutes a positioning reference point for the ferrules 1 and 1'. The ferrule 1' with a larger diameter is likely to be displaced toward the slit 5a. Defining the center of the total axial misalignment with respect to the center $O_1$ of the outer surface of the smaller ferrule 1 as $O_4$, and the center of the total axial misalignment with respect to the center $O_1$' of the outer surface of the larger ferrule 1' as $O_4$, displacement corresponding to a distance $d_s$ between $O_1$ and $O_1$' may be directed to the slit 5a. Here, the distance $d_s$ between $O_1$ and $O_1$' means a half value of difference in diameter between the larger ferrule 1' and the smaller ferrule 1.

Accordingly, the center of the paired axial misalignment is finally defined as $O_5$, and a distance $d_p$ between $O_4$ and $O_5$ means the paired axial misalignment.

Here, the outer diameters of the larger ferrule 1' and the smaller ferrule 1 are randomly extracted among the distribution data of outer diameter of ferrules, as shown in Fig. 1.

Next, for orientation error in the same manner as above, two data are randomly extracted among distribution data of orientation error to calculate paired orientation error.

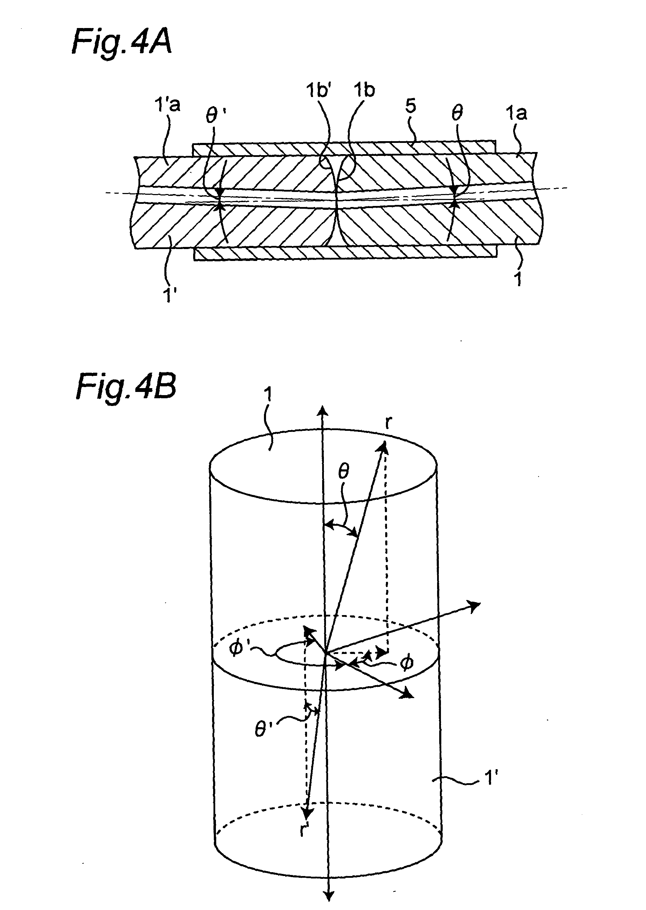

Fig. 4A is a cross-sectional view showing a state of the ferrules 1 and 1' being in contact with each other on the end faces 1b and 1b' inside the split sleeve 5. Fig. 4B is an three-dimensional diagram representing the orientation error in polar coordinates.

The through-holes 1a and 1a' are tilted to the outer surfaces 1c and 1c' by $\theta$ and $\theta'$ degree, respectively, in the cross-section. However, when considering tilting with $\varphi$ and $\varphi'$ among 360-degree directions on the basis of the contact face, a relative angle between an orientation error vector r of the ferrule 1 and an orientation error vector r' of the ferrule 1' means the paired orientation error.

Incidentally, the more number of distribution data of respective parameters is better for the simulator according to the present invention. The less number of data brings the worse precision of connection loss value to be obtained. It is enough to have at least 32 data.

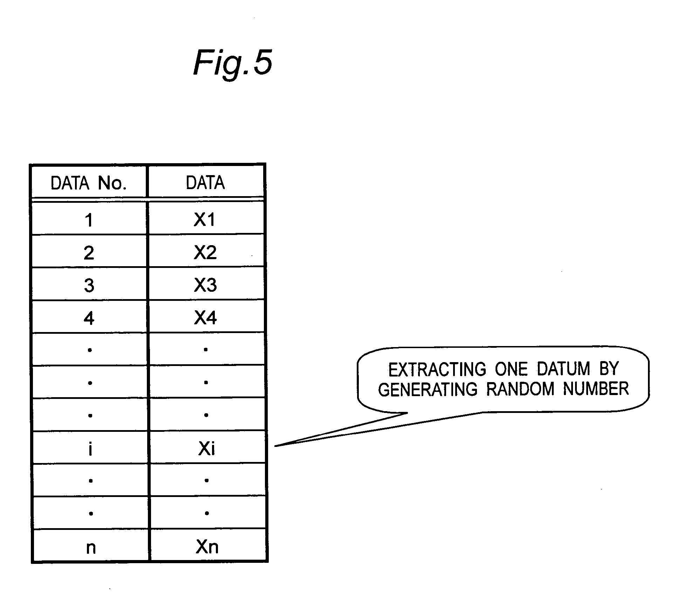

Here, a method for extracting randomly and evenly one datum among distribution data using random number will be described below, referring to Fig. 5.

Respective data are numbered in advance with serial integers 1 to n. In this case, it is not always necessary to arrange data Xn. Next, after generating a random number to extract an i-th data number, data Xi associated therewith is extracted. Specifically, for example, by using a function RANDBETWEEN (1,n) in the above-mentioned spreadsheet software "Excel", an integer 1 to n can be generated, and then datum inputted in the i-th cell can be extracted based on the one resulting random number.

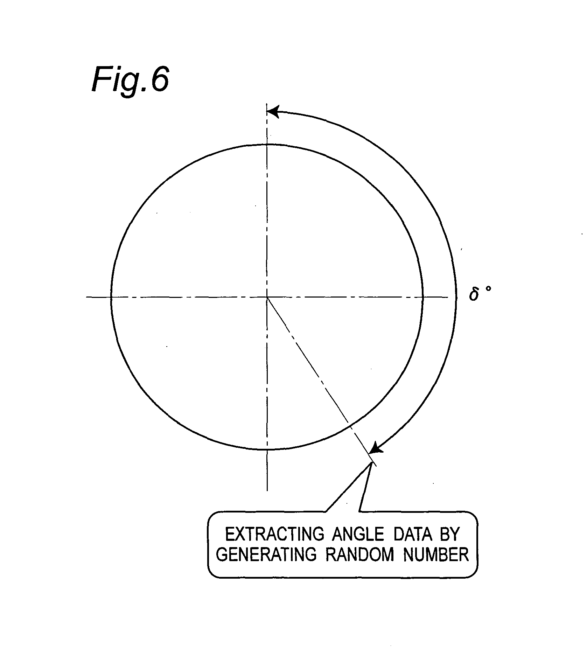

Next, a method for extracting randomly and evenly one datum among angles in 360-degree directions using random number will be described below in Fig. 6.

One angle can be selected from 0 to 359.9999... degree, but a unit of one degree is enough for calculating connection loss, so $\delta$ degree is extracted from 0 to 359 degree. This can also be obtained, as described above, by using a function RANDBETWEEN(1,359) in the spreadsheet software "Excel", and an integer 0 to 359 can be generated, and then the angle can be selected based on the one resulting random number.

Thus, the paired axial misalignment and the paired orientation error can be calculated.

Next, returning to Fig. 1, from the paired axial misalignment, connection loss $IL_\Delta$ due to axial misalignment is calculated by Equation 3. Further, from the paired orientation error, connection loss $IL_\theta$ due to orientation error is calculated by Equation 5. Then, by generating a random number among distribution data of connection loss of a split sleeve as described above, one value of connection loss $IL_s$ is extracted.

Incidentally, for the split sleeve the connection loss $IL_s$ is extracted by generating a random number among distribution data of connection loss, otherwise the connection loss may be calculated by randomly extracting data among distribution data of dimension of the split sleeve.

The sum of the connection loss $IL_\Delta$ due to axial misalignment, the connection loss $IL_\theta$ due to orientation error, and the connection loss $IL_s$ of the split sleeve means a total connection loss. The total connection loss is based on a combination of a pair of ferrules. Next, a plurality of connection loss are calculated as described above. Distribution data can be obtained from the plurality of connection loss.

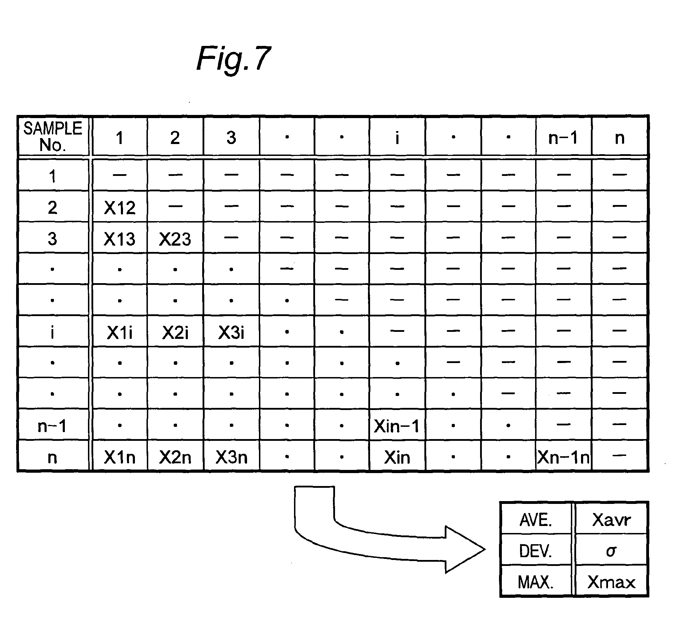

For a method for obtaining the distribution data of connection loss, as shown in Fig. 7, in case of sampling n plugs, after randomly extracting six parameters including inner diameter, coaxiality, outer diameter, orientation error of ferrule, and coaxiality, outer diameter of optical fiber in each plug, these parameters are combined in round-robin system. The connection loss of the split sleeve is randomly extracted and added to each combination.

For example, in case of defining connection loss between Sample 1 and Sample as $X_{12}$, and connection loss between Sample 1 and Sample i as $X_{1i}$, and connection loss between Sample n-1 and Sample n as $X_{n-1n}$, an average, a deviation and a maximum value of all the data can be obtained to compile distribution data with the gross of $0.5x(n^2-n)$, preferably to represent them in histogram.

Incidentally, the maximum value does not mean a practical value because it may include a region with slight possibility on simulation. Hence it can be replaced with 97% of the maximum value as defined in IEC 61755-2-1.

The number of data of connection loss according to the present invention is preferably at least 100, more preferably 500 or more, because the more data can form distribution with a smoother curve in histogram.

Further, otherwise than the above-mentioned round-robin system, Method 1 as defined in IEC 61300-3-34 may be used, in which after using 10 patch cords each having plugs on both ends, and 10 adapters each having a split sleeve to combine 10 sets of each patch cord and each adapter, then data, such average, deviation and maximum value, among the gross of 380 can be obtained to compile distribution data.

Furthermore, Method 2 as defined in IEC 61300-3-34 may be used, in which after using 10 patch cords each having plugs on both ends, and 5 reference plugs each having a pair of adapter and patch cord, then data, such average, deviation and maximum value, among the gross of 100 can be obtained to compile distribution data.

The above description employs Monte Carlo method as an example. Otherwise than Monte Carlo method, any other method can be employed by calculating axial misalignment in an optical connecter including a ferrule, based on both of at least distribution data of dimension parameters of the ferrule and at least distribution data of dimension parameters of the optical fiber, and then calculating connection loss based on the axial misalignment, and then simulating distribution of the connection loss, thereby easily obtaining distribution data of values of connection loss in no need of a large number of man-hours and costs.

Moreover, the above description employs a hollow cylindrical single-core ferrule as an example of the present invention. Otherwise, a hollow cylindrical multicore ferrule or a rectangular ferrule can be employed, thereby attaining the same performance as the present invention.

While introducing alignment technique for matching a misaligned direction with a particular direction to reduce connection loss of optical connectors, the method for estimating connection loss of an optical connector, according to the present invention, may be employed.

The simulator for estimating connection loss of an optical connector, according to the present invention, includes a simulation software which employs the above-described method for estimating connection loss of an optical connector, as well as a hardware, such as personal computer, with the simulation software installed.

It is preferable to use the integrated spreadsheet software "Excel" for personal computer because of convenient, low-cost and common means. Otherwise, BASIC, FORTRAN, or C language may be used, thereby attaining the same performance as the present invention.

The method for estimating connection loss of an optical connector, and the simulator using the same, according to the present invention, can be applied to not only a single-mode optical fiber but also a multi-mode optical fiber.

A specific example will be described below.

By using the simulator for estimating connection loss of an optical connector, according to the present invention, as shown in Fig. 1, simulation was performed using distribution data with inner diameter of ferrule of $\varphi$152.2 to 125.7

μm, coaxiality of 0 to 0.8 μm, outer diameter of φ2.4989 to 2.4992 mm, orientation error of 0.02 to 0.14 degree, and coaxiality of optical fiber of 0 to 0.4 μm, outer diameter of 124.8 to 125.3 μm. Then, in the method of Fig. 7, in a case of using 50 plugs, 1,225 data of connection loss were obtained by round-robin system to plot a histogram.

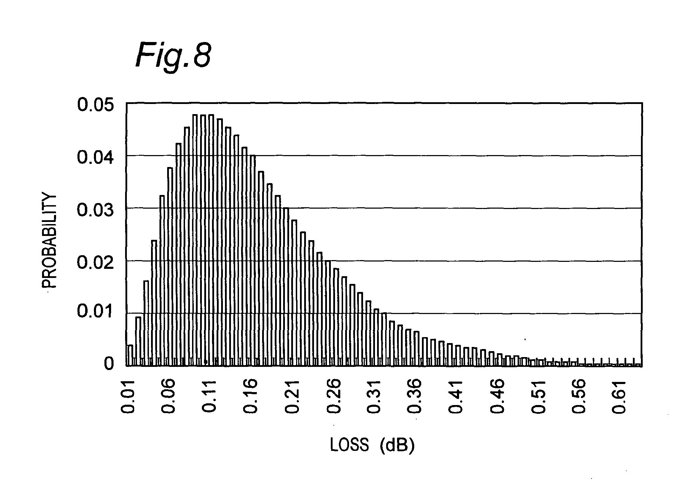

The resulting histogram is shown in Fig. 8.

Here, the vertical axis of the histogram shows probability, which is divided by the gross of 2,475.

The resulting connection loss exhibited the average of 0.154 dB, the deviation of 0.096 dB, the maximum value of 0.68 dB, and the 97%-maximum value of 0.37 dB.

Next, as a comparative example, 50 samples were manufactured, which exhibited the same distribution data as used in the above simulation, i.e., with inner diameter of ferrule of φ152.2 to 125.7 μm, coaxiality of 0 to 0.8 μm, outer diameter of φ2.4989 to 2.4992 mm, orientation error of 0.02 to 0.14 degree, and coaxiality of optical fiber of 0 to 0.4 μm, outer diameter of 124.8 to 125.3 μm. They were measured in connection loss using methods shown in Figs. 20A and 20B, resulting in 1,225 data of connection loss by round-robin system.

In this case, measurement was performed after confirming using optical microscope that no dust or no scratch resided on the polished end face of each ferrule.

The resulting connection loss exhibited the average of 0.163 dB, the deviation of 0.112 dB, and the maximum value of 0.64 dB.

As described above, it was verified that the method for simulating distribution of connection loss, according to the present invention, by calculating axial misalignment based on both of distribution data of dimension parameters of the ferrule and at least distribution data of dimension parameters of the optical fiber, could attain the approximately same values as in the method of actually manufacturing samples and measuring connection loss thereof.

In addition, time requirement of the present invention was several tens of minutes including data inputting, while time requirement of practical measurement in the comparative example was several tens of hours including sample manufacturing, measurement, and data compiling. The present invention could easily attain distribution data of connection loss in no need of a large number of man-hours and costs.

(Embodiment 2)

This embodiment includes steps of: calculating each axial misalignment based on distribution data of dimension parameters of both of a ferrule having a through-hole along the longitudinal direction and an optical fiber inserted thereinto, and/or orientation error based on distribution data of angle parameters of the ferrule; calculating the sum of the axial misalignments and/or the orientation errors in terms of vector quantity in a plane perpendicular to an axial direction of the optical fiber and the ferrule; calculating distribution of axial misalignment and/or orientation error in a connection state; and calculating distribution of connection loss.

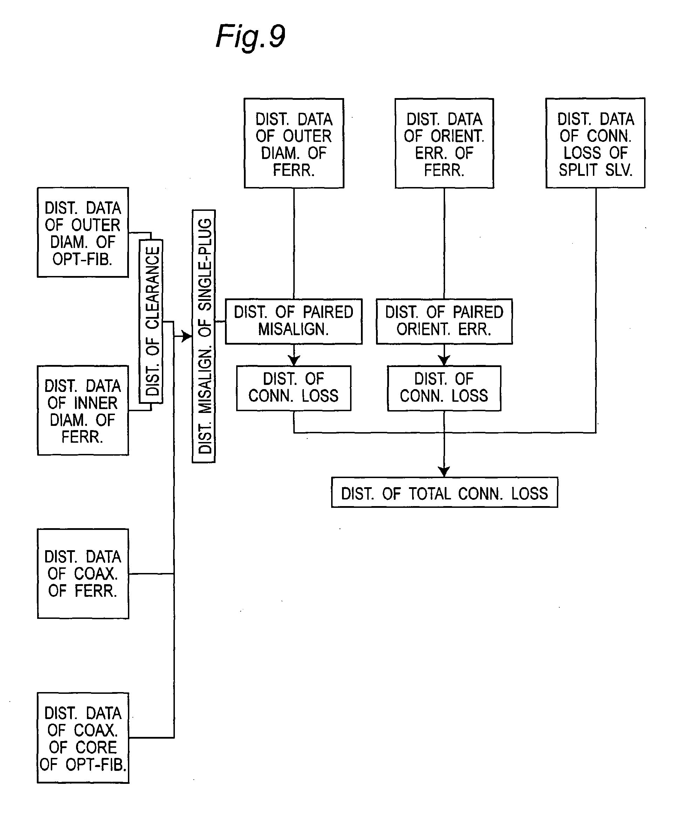

As an example of the present invention, Fig. 9 shows a method for simulating distribution of connection loss by means of transformation of probability variables.

First, distribution data of outer diameter of an optical fiber and distribution data of inner diameter of a ferrule are transformed into distribution data of half value of a clearance between the optical fiber and the ferrule. Since the outer surface of the optical fiber surely comes in contact with the inner surface of the ferrule on at least one point in the end face of the ferrule, the clearance between the inner diameter of the ferrule and the out diameter of the optical fiber, i.e., half of a value of the outer diameter of the optical fiber subtracted from the inner diameter of the ferrule, means axial misalignment.

Next, both distribution data of coaxiality of ferrules and distribution data of coaxiality of optical fibers are prepared.

Distribution of the total axial misalignment of a single plug is calculated based on the above-described distribution of half value of the outer diameter of the optical fiber subtracted from the inner diameter of the ferrule, the distribution of coaxiality of ferrules and the distribution of coaxiality of core of optical fibers.

As shown in Fig. 2A, the optical fiber protector 2 is fixed to the ferrule 1 having the through-hole 1a, and the optical fiber 3 is inserted and fixed into the opening of the optical fiber protector 2, thereby forming the plug 10. Axial misalignment means, as shown in Fig. 2B, displacement from the center of the outer surface 1c in the end face 1b of the ferrule.

Here, defining the center of the outer surface 1c as $O_1$, the center of the through-hole of the ferrule as $O_2$, respectively, displacement of $O_2$ means half value of coaxiality. Next, defining the center of the optical fiber as $O_3$, a distance between $O_2$ and $O_3$ means half of the value of the outer diameter of the optical fiber subtracted from the inner diameter of the ferrule. Further, defining the center of core of the optical fiber as $O_4$, a distance between $O_3$ and $O_4$ means half value of coaxiality of core of the optical fiber. Finally, a distance between $O_1$ and $O_4$ means total axial misalignment $d_T$ relative to the outer surface 1c of the ferrule.

Then, since one axial misalignment for each parameter is randomly distributed in misaligned direction, even if axial misalignment for each parameter is large, the total axial misalignment is not always large.

As described above, axial misalignment of the single plug can be calculated. However, it must be calculated on condition of a pair of plugs being in contact with each other for an optical connector. Hence, a method for calculating the paired axial misalignment will be described below using Figs. 3A and 3B.

Fig. 3A shows a state of the ferrule 1 in contact with another ferrule 1', in which end faces 1b and 1b' come in contact with each other by the split sleeve 5.

Here, as shown in Fig. 3B, the inner surface of an opposite portion 5b to the slit 5a of the split sleeve 5 constitutes a positioning reference point for the ferrules 1 and 1'. The ferrule 1' with a larger diameter is likely to be displaced toward the slit 5a. Defining the center of the total axial misalignment with respect to the center $O_1$ of the outer surface of the smaller ferrule 1 as $O_4$, and the center of the total axial misalignment with respect to the center $O_1'$ of the outer surface of the larger ferrule 1' as $O_4$, displacement corresponding to a distance $d_s$ between $O_1$ and $O_1'$ may be directed to the slit 5a. Here, the distance $d_s$ between $O_1$ and $O_1'$ means a half value of difference in diameter between the larger ferrule 1' and the smaller ferrule 1.

Accordingly, the center of the paired axial misalignment is finally defined as $O_5$, and a distance dp between $O_4$ and $O_5$ means the paired axial misalignment.

Here, the outer diameters of the larger ferrule 1' and the smaller ferrule 1 are randomly extracted among the distribution data of outer diameter of ferrules, as shown in Fig. 9.

Next, for orientation error in the same manner as above, distribution of paired orientation error is calculated based on distribution data of orientation error of the single ferrule.

As shown in Fig. 4A, the ferrules 1 and 1' are in contact with each other on the end faces 1b and 1b' inside the split sleeve 5. The through-holes 1a and 1a' are tilted to the outer surfaces 1c and 1c' by θ and θ' degree, respectively, in the cross-section. However, when considering tilting with φ and φ' along any angular direction in the contact face, a relative angle between an orientation error vector r of the ferrule 1 and an orientation error vector r' of the ferrule 1' means the paired orientation error.

Here, a method for synthesizing two distribution data of dimension parameters in consideration of an angle between the two dimension parameters will be described below.

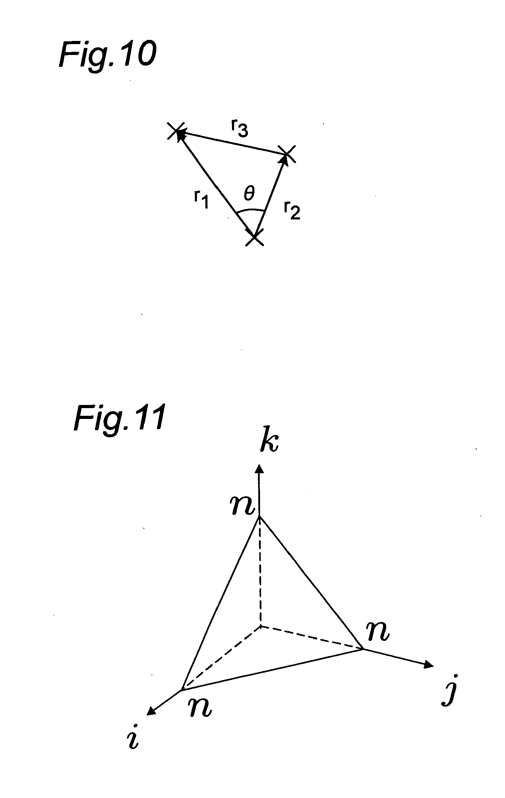

Fig. 10 illustrates that a vector of dimension parameter 1 and a vector of dimension parameter 2 are summed to produce a vector of dimension parameter 3. The angle θ is evenly distributed in a range of 0 to 180 degree because each vector is randomly distributed in direction. Hence, each of the dimension parameters 1 and 2 and the angle θ has some distribution. The magnitude of the dimension parameter 3 can be represented by the dimension parameters 1 and 2 and the angle θ using the cosine formula of trigonometric function. Synthesizing the dimension parameters 1 and 2 means transformation of probability distribution with independent variables of probability including the dimension parameters 1 and 2 and the angle θ into another distribution with a single variable of probability, that is, the synthesized dimension parameter 3. In other words, the distribution can be calculated by transforming the three variables of probability, that is, the dimension parameters 1 and 2 and the angle θ, into the dimension parameter 3.

Two distribution data of angle parameters are also synthesized in consideration of an angle between the two angle parameters using the above-described method.

Thus, both of distribution of the paired axial misalignment and distribution of the paired orientation error can be calculated.

Next, returning to Fig. 9, from the distribution of the paired axial misalignment, distribution of connection loss due to axial misalignment is calculated by Equation 3. Further, from the distribution of the paired orientation error, distribution of connection loss due to orientation error is calculated by Equation 5.

Distribution of the total connection loss can be calculated by summing the distribution of connection loss due to axial misalignment, the distribution of connection loss due to orientation error, and the distribution of connection loss of the split sleeve. Specifically, in a case of each connection loss containing a different factor being sufficiently low, it is enough to sum up each connection loss due to each factor. Hence, the total connection loss means the sum of connection loss due to axial misalignment, connection loss due to orientation error, and connection loss of the split sleeve. In other words, the total connection loss IL can be represented by the following equation, using the connection loss $IL_\Delta$ due to axial misalignment, the connection loss $IL_\theta$ due to orientation error, and the connection loss $IL_s$ of the split sleeve.

(Equation 6)

$$IL = IL_\Delta + IL_\theta + IL_{sl}$$

Incidentally, each connection loss is non-negative, and ex facto discrete variable as practical data, not continuous variable. Hence, by using non-negative integers i, j, k, n in a unit of, e.g., 0.01 dB, the connection loss due to axial misalignment can be expressed as i, the connection loss due to orientation error as j, the connection loss of the split sleeve as k, and the total connection loss as n, respectively. Further, probability of each variable can be expressed as

$P_\Delta$ (i) ; $P_\theta$(j); $P_{s1}$(k); P(n), respectively. Each probability means a height of histogram in each probability distribution of connection loss. Each non-negative integers i, j, k, n means a label of each histogram. Therefore, Equation 6 can be rewritten in discrete form as follows:

(Equation 7)

$$n = i + j + k$$

Geometrically describing, as show in Fig. 11, Equation 7 means an equation which can represent coordinates (i, j, k) residing in a triangle which intersects at each point of a value n with i-, j- and k-axes. In addition, probability with the connection loss i due to axial misalignment, the connection loss j due to orientation error, and the connection loss k of the split sleeve can be represented as $P_\Delta$ (i) x $P_\theta$ (j ) x $P_{s1}$ (k). Hence, all sets of i, j, k satisfying Equation 7 can conform to the total connection loss n. The probability P(n) with the total connection loss n can be obtained by calculating the summation of $P_\Delta$ (i) x $P_\theta$ (j) x $P_{s1}$(k) with respect to all sets of i, j, k satisfying Equation 7. It can be represented by the following equation.

(Equation 8)

$$P(n) = \sum_i \sum_j \sum_k P_\Delta(i) P_\theta(j) P_{sl}(k)$$

By using this distribution of the total connection loss, an average, a deviation and a maximum value of the total connection loss can be calculated. Incidentally, the maximum value does not mean a practical value because it may include a region with slight possibility on simulation. Hence it can be replaced with 97% of the maximum value as defined in IEC 61755-2-1.

The number of data of dimension parameters used for the present invention is preferably at least 10, more preferably 100 or more, because the more data can form distribution with a smoother curve in histogram.

Further, resolution of data of dimension parameters is preferably 0.1 $\mu$m or below, more preferably 0.05 $\mu$m or below, because smaller resolution of data can form a histogram closer to continuous probability distribution.

In the above-described embodiment, connection loss is calculated using both of axial misalignment and orientation error. For example, in a case of orientation error being very smaller than axial misalignment, connection loss can be calculated using only axial misalignment. In adverse case, it can be calculated using only orientation error.

The above description employs transformation of probability variables as an example. Otherwise than transformation of probability variables, any other method can be employed by calculating distribution of axial misalignment in an optical connecter including a ferrule, based on both of at least distribution data of dimension parameters of the ferrule and at least distribution data of dimension parameters of the optical fiber, and then calculating connection loss based thereon, thereby easily obtaining distribution data of values of connection loss in no need of a large number of man-hours and costs.

While introducing alignment technique for matching a misaligned direction with a particular direction to reduce connection loss of optical connectors, the method for estimating connection loss of an optical connector, according to the present invention, may be employed.

The present invention can provide a simulation software by using the above-described method for estimating connection loss of an optical connector.

It is preferable to use the integrated spreadsheet software "Excel" for personal computer because of convenient, low-cost and common means. Otherwise, BASIC, FORTRAN, or C language may be used, thereby attaining the same performance as the present invention.

The method for estimating connection loss of an optical connector, and the simulator using the same, according to the present invention, can be applied to not only a single-mode optical fiber but also a multi-mode optical fiber.

A specific example will be described below.

By using the simulator for estimating connection loss of an optical connector, according to the present invention, as shown in Fig. 9, simulation was performed using distribution data with inner diameter of ferrule of φ125.2 to 125.7 $\mu$m, coaxiality of 0 to 0.8 $\mu$m, outer diameter of φ2.4989 to 2.4992 mm, orientation error of 0.02 to 0.14 degree, and coaxiality of optical fiber of 0 to 0.4 $\mu$m, outer diameter of 124.8 to 125.3 $\mu$m.

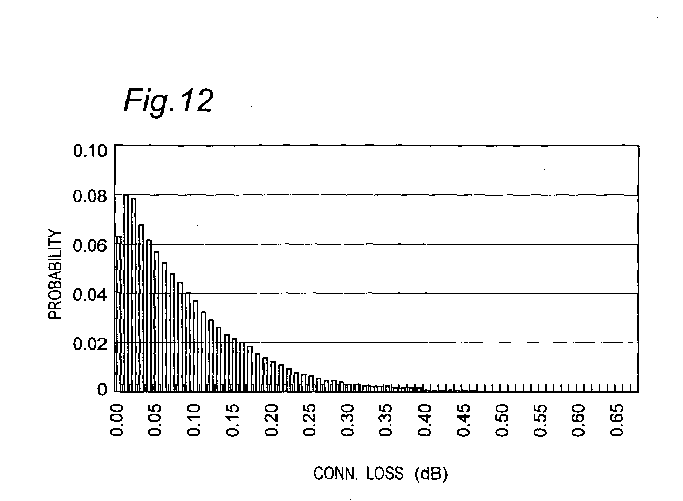

The resulting histogram of probability distribution of the total connection loss is shown in Fig. 12.

The resulting connection loss exhibited the average of 0.089 dB, and the 97%-maximum value of 0.276 dB.

Next, as a comparative example, 50 samples were manufactured, which exhibited the same distribution data as used in the above simulation, i.e., with inner diameter of ferrule of φ125.2 to 125.7 μm, coaxiality of 0 to 0.8 μm, outer diameter of φ2.4989 to 2.4992 mm, orientation error of 0.02 to 0.14 degree, and coaxiality of optical fiber of 0 to 0.4 μm, outer diameter of 124.8 to 125.3 μm. They were measured in connection loss using methods shown in Figs. 20A and 20B, resulting in 1,225 data of connection loss by round-robin system.

In this case, measurement was performed after confirming using optical microscope that no dust or no scratch resided on the polished end face of each ferrule.

The resulting connection loss exhibited the average of 0.085 dB, and the 97%-maximum value of 0.200 dB.

As described above, it was verified that the method for simulating distribution of connection loss, according to the present invention, by calculating each axial misalignment based on distribution data of dimension parameters of both of a ferrule and an optical fiber, and orientation error based on distribution data of angle parameters of the ferrule, and then calculating the sum of the axial misalignments and/or the orientation errors in terms of vector quantity in a plane perpendicular to an axial direction of the optical fiber and the ferrule, and then calculating distribution of axial misalignment and orientation error in a connection state, and then calculating distribution of connection loss based thereon, could attain the approximately same values as in the method of actually manufacturing samples and measuring connection loss thereof.

In addition, time requirement of the present invention was several tens of minutes including data inputting, while time requirement of practical measurement in the comparative example was several tens of hours including sample manufacturing, measurement, and data compiling. The present invention could easily attain distribution data of connection loss in no need of a large number of man-hours and costs.

(Embodiment 3)

This embodiment includes steps of: calculating each axial misalignment based on distribution data of dimension parameters of both of a ferrule having a through-hole along the longitudinal direction and an optical fiber inserted thereinto, and/or orientation error based on distribution data of angle parameters of the ferrule; calculating the sum of the axial misalignments and/or the orientation errors in terms of vector quantity in a plane perpendicular to an axial direction of the optical fiber and the ferrule; calculating the n-th moment of axial misalignment and/or orientation error in a connection state; and calculating the n-th moment of connection loss. The n-th moment of discrete probability variables x(i) can be represented using the probability distribution P(i) by the following equation.

(Equation 9)

$$\sum_i P(i)x(i)^n$$

The 1st moment means an average as described by the following equation.

(Equation 10)

$$\sum_i P(i)x(i)$$

The variance thereof can be represented using the ist and 2nd moment by the following equation.

(Equation 11)

$$\sum_i P(i)x(i)^2 - \{\sum_i P(i)x(i)\}^2$$

Thus, an average and a variance of probability distribution can be calculated using n-th moment. Specifically, calculation of an average of connection loss requires the 1st moment of the connection loss, and calculation of a variance thereof requires the 1st and 2nd moments of the connection loss. Meanwhile the connection loss as such is proportional to square of axial misalignment or orientation error. Hence, calculation of the average of the connection loss requires the 2nd and 4th moments of the axial misalignment or the orientation error. Moreover, in case of taking more general connection of optical connectors into consideration, all the 1st to 4th moments of axial misalignment or orientation error are required.

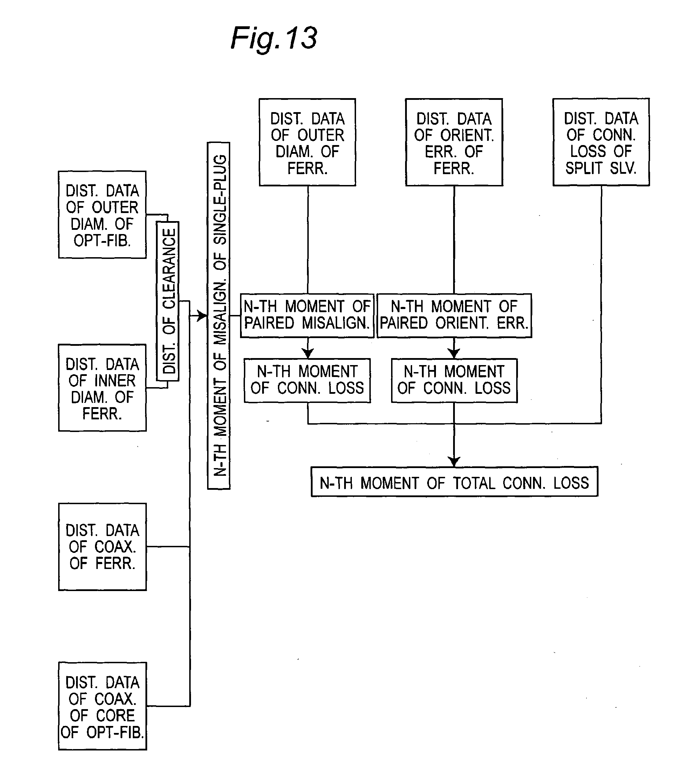

As an example of the present invention, Fig. 13 shows a method for simulating the n-th moment of connection loss.

First, distribution data of outer diameter of an optical fiber and distribution data of inner diameter of a ferrule are transformed into distribution data of half value of a clearance between the optical fiber and the ferrule. Since the outer surface of the optical fiber surely comes in contact with the inner surface of the ferrule on at least one point in the end face of the ferrule, the clearance between the inner diameter of the ferrule and the out diameter of the optical fiber, i.e., half of a value of the outer diameter of the optical fiber subtracted from the inner diameter of the ferrule, means axial misalignment.

Next, both distribution data of coaxiality of ferrules and distribution data of coaxiality of optical fibers are prepared.

The n-th moment of the total axial misalignment of a single plug is calculated based on the above-described distribution of half value of the outer diameter of the optical fiber subtracted from the inner diameter of the ferrule, the distribution of coaxiality of ferrules and the distribution of coaxiality of core of optical fibers.

Further, the n-th moment of the paired axial misalignment is calculated based on the two n-th moments of the axial misalignment of both single plugs and the n-th moment of difference in outer diameter of the ferrule.

As shown in Fig. 2A, the optical fiber protector 2 is fixed to the ferrule 1 having the through-hole 1a, and the optical fiber 3 is inserted and fixed into the opening of the optical fiber protector 2, thereby forming the plug 10. Axial misalignment means, as shown in Fig. 2B, displacement from the center of the outer surface 1c in the end face 1b of the ferrule.

Here, defining the center of the outer surface 1c as $O_1$, the center of the through-hole of the ferrule as $O_2$, respectively, displacement of $O_2$ means half value of coaxiality. Next, defining the center of the optical fiber as $O_3$, a distance between $O_2$ and $O_3$ means half of the value of the outer diameter of the optical fiber subtracted from the inner diameter of the ferrule. Further, defining the center of core of the optical fiber as $O_4$, a distance between $O_3$ and $O_4$ means half value of coaxiality of core of the optical fiber. Finally, a distance between $O_1$ and $O_4$ means total axial misalignment $d_T$ relative to the outer surface 1c of the ferrule.

Then, since one axial misalignment for each parameter is randomly distributed in misaligned direction, even if axial misalignment for each parameter is large, the total axial misalignment is not always large.

As described above, axial misalignment of the single plug can be calculated. However, it must be calculated on condition of a pair of plugs being in contact with each other for an optical connector. Hence, a method for calculating the paired axial misalignment will be described below using Figs. 3A and 3B.

Fig. 3A shows a state of the ferrule 1 in contact with another ferrule 1', in which end faces 1b and 1b' come in contact with each other by the split sleeve 5.

Here, as shown in Fig. 3B, the inner surface of an opposite portion 5b to the slit 5a of the split sleeve 5 constitutes a positioning reference point for the ferrules 1 and 1'. The ferrule 1' with a larger diameter is likely to be displaced toward the slit 5a. Defining the center of the total axial misalignment with respect to the center $O_1$ of the outer surface of the smaller ferrule 1 as $O_4$, and the center of the total axial misalignment with respect to the center $O_1$' of the outer surface of the larger ferrule 1' as $O_4$, displacement corresponding to a distance $d_s$ between $O_1$ and $O_1$' may be directed to the slit 5a. Here, the distance $d_s$ between $O_1$ and $O_1$' means a half value of difference in diameter between the larger ferrule 1' and the smaller ferrule 1.

Accordingly, the center of the paired axial misalignment is finally defined as $O_5$, and a distance dp between $O_4$ and $O_5$ means the paired axial misalignment.

Next, for orientation error in the same manner as above, the n-th moment of paired orientation error is calculated based on distribution data of orientation error of the single ferrule.

As shown in Fig. 4A, the ferrules 1 and 1' are in contact with each other on the end faces 1b and 1b' inside the split sleeve 5. The through-holes 1a and 1a' are tilted to the outer surfaces 1c and 1c' by θ and θ' degree, respectively, in the cross-section. However, when considering tilting with φ and φ' along any angular direction in the contact face, a relative angle between an orientation error vector r of the ferrule 1 and an orientation error vector r' of the ferrule 1' means the paired orientation error.

Here, a method for synthesizing the two n-th moments of dimension parameters in consideration of an angle between the two dimension parameters will be described below.

As shown in Fig. 10, a vector of dimension parameter 1 and a vector of dimension parameter 2 are summed to produce a vector of dimension parameter 3. The angle θ is evenly distributed in a range of 0 to 180 degree because each vector is randomly distributed in direction. The magnitude of the dimension parameter 3 can be represented by the dimension parameters 1 and 2 and the angle θ using the cosine formula of trigonometric function. Hence, the n-th moment of the dimension parameter 3 can also be represented by the dimension parameters 1 and 2 and the angle θ and the probability distribution thereof. Then, by integrating it with respect to the angle θ, the n-th moment of the dimension parameter 3 can be represented by only the n-th moments of the dimension parameters 1 and 2.

The two n-th moments of angle parameters are also synthesized in consideration of an angle between the two angle parameters using the above-described method.

Thus, both of the n-th moment of the paired axial misalignment and the n-th moment of the paired orientation error can be calculated.

Next, returning to Fig. 13, from the n-th moment of the paired axial misalignment, the n-th moment of connection loss due to axial misalignment is calculated by Equation 3. Further, from the n-th moment of the paired orientation error, the n-th moment of connection loss due to orientation error is calculated by Equation 5.

The n-th moment of the total connection loss can be calculated by summing the n-th moment of connection loss due to axial misalignment, the n-th moment of connection loss due to orientation error, and the n-th moment of connection loss of the split sleeve. Specifically, an example of the 1st moment, i.e., average will be discussed below. In a case of each connection loss containing a different factor being sufficiently low, it is enough to sum up each connection loss due to each factor. Hence, the total connection loss means the sum of connection loss due to axial misalignment, connection loss due to orientation error, and connection loss of the split sleeve. In other words, the total connection loss IL can be represented by the following equation, using the connection loss $IL_\Delta$ due to axial misalignment, the connection loss $IL_\theta$ due to orientation error, and the connection loss $IL_s$ of the split sleeve.

(Equation 12)

$$IL = IL_\Delta + IL_\theta + IL_{sl}$$

Incidentally, each connection loss is non-negative. The respective 1st moments, i.e., averages, are expressed as $<IL_\Delta>$; $<IL_\theta>$; $<IL_{S1}>$; $<IL>$, respectively. Since each connection loss due to axial misalignment, orientation error and the split sleeve is independent mutually, the 1st moment, i.e., average of the total connection loss can be represented by the following equation.

(Equation 13)

$$<IL>=<IL_\Delta> + <IL_\theta> + <IL_{sl}>$$

The number of data of dimension parameters used for the present invention is preferably at least 10, more preferably 100 or more, because the more data can form smoother probability distribution in histogram of dimension parameter.

Further, resolution of data of dimension parameters is preferably 0.1 μm or below, more preferably 0.05 μm or below, because smaller resolution of data can calculate the n-th moment with higher precision.

In the above-described embodiment, connection loss is calculated using both of axial misalignment and orientation error. For example, in a case of orientation error being very smaller than axial misalignment, connection loss can be calculated using only axial misalignment. In adverse case, it can be calculated using only orientation error.

While introducing alignment technique for matching a misaligned direction with a particular direction to reduce connection loss of optical connectors, the method for estimating connection loss of an optical connector, according to the present invention, may be employed.

The present invention can provide a simulation software by using the above-described method for estimating connection loss of an optical connector.

It is preferable to use the integrated spreadsheet software "Excel" for personal computer because of convenient, low-cost and common means. Otherwise, BASIC, FORTRAN, or C language may be used, thereby attaining the same performance as the present invention.

The method for estimating connection loss of an optical connector, and the simulator using the same, according to the present invention, can be applied to not only a single-mode optical fiber but also a multi-mode optical fiber.

A specific example will be described below.

By using the simulator for estimating connection loss of an optical connector, according to the present invention, as shown in Fig. 13, simulation was performed using distribution data with inner diameter of ferrule of φ125.2 to 125.7

μm, coaxiality of 0 to 0.8 μm, outer diameter of φ2.4989 to 2.4992 mm, orientation error of 0.02 to 0.14 degree, and coaxiality of optical fiber of 0 to 0.4 μm, outer diameter of 124.8 to 125.3 μm.

The resulting connection loss exhibited the average of 0.089 dB.

Next, as a comparative example, 50 samples were manufactured, which exhibited the same distribution data as used in the above simulation, i.e., with inner diameter of ferrule of φ125.2 to 125.7 μm, coaxiality of 0 to 0.8 μm, outer diameter of φ2.4989 to 2.4992 mm, orientation error of 0.02 to 0.14 degree, and coaxiality of optical fiber of 0 to 0.4 μm, outer diameter of 124.8 to 125.3 μm. They were measured in connection loss using methods shown in Figs. 20A and 20B, resulting in 1,225 data of connection loss by round-robin system.

In this case, measurement was performed after confirming using optical microscope that no dust or no scratch resided on the polished end face of each ferrule.

The resulting connection loss exhibited the average of 0.085 dB.

As described above, it was verified that the method for simulating distribution of connection loss, according to the present invention, by calculating each axial misalignment based on distribution data of dimension parameters of both of a ferrule and an optical fiber, and orientation error based on distribution data of angle parameters of the ferrule, and then calculating the sum of the axial misalignments and/or the orientation errors in terms of vector quantity in a plane perpendicular to an axial direction of the optical fiber and the ferrule, and then calculating the n-th moments of axial misalignment and orientation error in a connection state, and then calculating the n-th moment of connection loss based thereon, could attain the approximately same values as in the method of actually manufacturing samples and measuring connection loss thereof.

In addition, time requirement of the present invention was several tens of minutes including data inputting, while time requirement of practical measurement in the comparative example was several tens of hours including sample manufacturing, measurement, and data compiling. The present invention could easily attain distribution data of connection loss in no need of a large number of man-hours and costs.

(Embodiment 4)

This embodiment includes steps of: performing tuning, that is a method for aligning a misaligned direction of a single plug, based on both of distribution data of axial misalignment of the single plug, which includes a ferrule having a through-hole along the longitudinal direction, and an optical fiber inserted thereinto, and distribution data of a diameter of the ferrule; calculating the n-th moment of axial misalignment and/or orientation error in the tuned connection state; and calculating the n-th moment of connection loss. The distribution data of axial misalignment of the single plug is calculated based on distribution of clearance caused between an inner diameter of the ferrule and an outer diameter of the optical fiber, and distribution of coaxiality between the outer surface and the through-hole of the ferrule, and distribution of coaxiality between a core and a clad of the optical fiber.

The n-th moment of discrete probability variables $x(i)$ can be represented using the probability distribution $P(i)$ by the following equation.

$$(\text{Equation } 14)$$

$$\sum_i P(i)x(i)^n$$

The 1st moment means an average as described by the following equation.

$$(\text{Equation } 15)$$

$$\sum_i P(i)x(i)$$

The variance thereof can be represented using the ist and 2nd moment by the following equation.

(Equation 16)

$$\sum_i P(i)x(i)^2 - \left\{\sum_i P(i)x(i)\right\}^2$$

Thus, an average and a variance of probability distribution can be calculated using n-th moment. Specifically, calculation of an average of connection loss requires the 1st moment of the connection loss, and calculation of a variance thereof requires the 1st and 2nd moments of the connection loss. Meanwhile the connection loss as such is proportional to square of axial misalignment or orientation error. Hence, calculation of the average of the connection loss requires the 1st and 2nd moments of the axial misalignment or the orientation error, and calculation of the variance thereof requires the 1st to 4th moments of axial misalignment or orientation error are required.

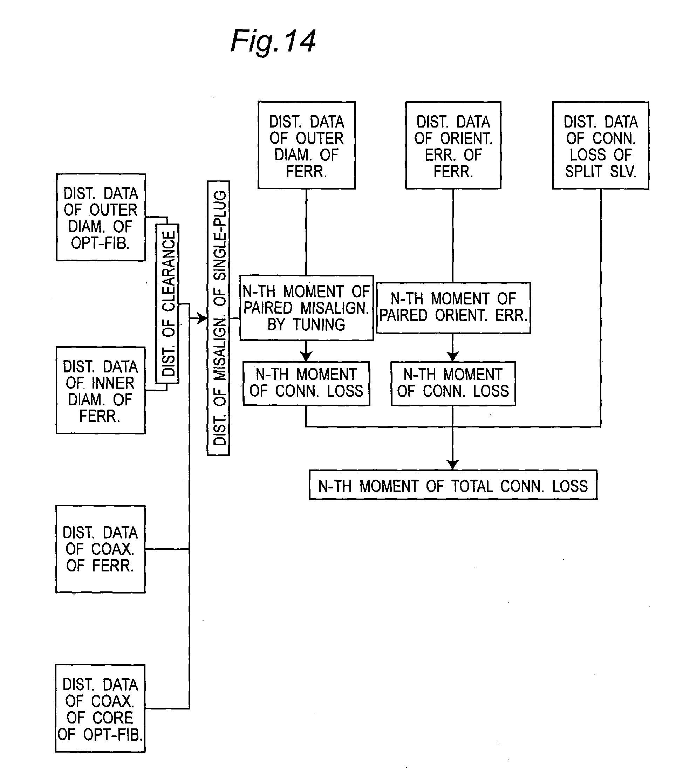

As an example of the present invention, Fig. 14 shows a method for simulating the n-th moment of connection loss.

The distribution data of axial misalignment of the single plug is calculated based on clearance caused between an inner diameter of the ferrule and an outer diameter of the optical fiber, and coaxiality between the outer surface and the through-hole of the ferrule, and coaxiality between a core and a clad of the optical fiber. Then, the n-th moment of the tuned and paired axial misalignment is calculated based on the two n-th moments of the axial misalignment of both single plugs and the n-th moment of difference in outer diameter of the ferrule.

As shown in Fig. 2A, the optical fiber protector 2 is fixed to the ferrule 1 having the through-hole 1a, and the optical fiber 3 is inserted and fixed into the opening of the optical fiber protector 2, thereby forming the plug 10. Axial misalignment means, as shown in Fig. 2B, displacement from the center of the outer surface 1c in the end face 1b of the ferrule.

Here, defining the center of the outer surface 1c as $O_1$, the center of the through-hole of the ferrule as $O_2$, respectively, displacement of $O_2$ means half value of coaxiality. Next, defining the center of the optical fiber as $O_3$, a distance between $O_2$ and $O_3$ means half of the value of the outer diameter of the optical fiber subtracted from the inner diameter of the ferrule. Further, defining the center of core of the optical fiber as $O_4$, a distance between $O_3$ and $O_4$ means half value of coaxiality of core of the optical fiber. Finally, a distance between $O_1$ and $O_4$ means total axial misalignment $d_T$ relative to the outer surface 1c of the ferrule.

Then, since one axial misalignment for each parameter is randomly distributed in misaligned direction, even if axial misalignment for each parameter is large, the total axial misalignment is not always large.

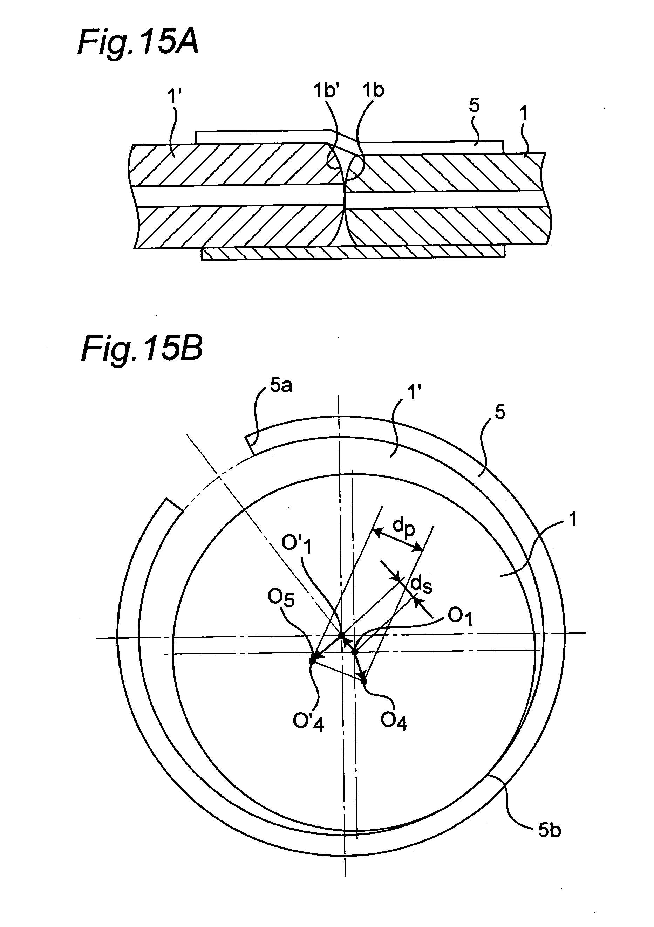

As described above, axial misalignment of the single plug can be calculated. However, it must be calculated on condition of a pair of plugs being in contact with each other for an optical connector. Hence, a method for calculating the tuned and paired axial misalignment will be described below using Figs. 15A and 15B.

Fig. 15A shows a state of the ferrule 1 in contact with another ferrule 1', in which end faces 1b and 1b' come in contact with each other by the split sleeve 5.

Here, as shown in Fig. 15B, the inner surface of an opposite portion 5b to the slit 5a of the split sleeve 5 constitutes a positioning reference point for the ferrules 1 and 1'. The ferrule 1' with a larger diameter is likely to be displaced toward the slit 5a. Defining the center of the total axial misalignment with respect to the center $O_1$ of the outer surface of the smaller ferrule 1 as $O_4$, and the center of the total axial misalignment with respect to the center $O_1'$ of the outer surface of the larger ferrule 1' as $O_4$, displacement corresponding to a distance $d_s$ between $O_1$ and $O_1'$ may be directed to the slit 5a. Here, the distance $d_s$ between $O_1$ and $O_1'$ means a half value of difference in diameter between the larger ferrule 1' and the smaller ferrule 1.

Accordingly, the center of the tuned and paired axial misalignment is finally defined as $O_5$, and a distance dp between $O_4$ and $O_5$ means the paired axial misalignment. In this case, taking advantage of tuning, an angle between the line segment $O_1O_4$ and the line segment $O_1'O_4'$ is in a range of 90 degree, resulting in smaller dp.

Next, for orientation error in the same manner as above, the n-th moment of paired orientation error is calculated based on distribution data of orientation error of the single ferrule.

As shown in Fig. 4A, the ferrules 1 and 1' are in contact with each other on the end faces 1b and 1b' inside the split sleeve 5. The through-holes 1a and 1a' are tilted to the outer surfaces 1c and 1c' by θ and θ' degree, respectively, in the cross-section. However, when considering tilting with φ and φ' along any angular direction in the contact face, a relative angle between an orientation error vector r of the ferrule 1 and an orientation error vector r' of the ferrule 1' means the paired orientation error.

Here, a method for synthesizing the two n-th moments of dimension parameters in consideration of an angle between the two dimension parameters will be described below.

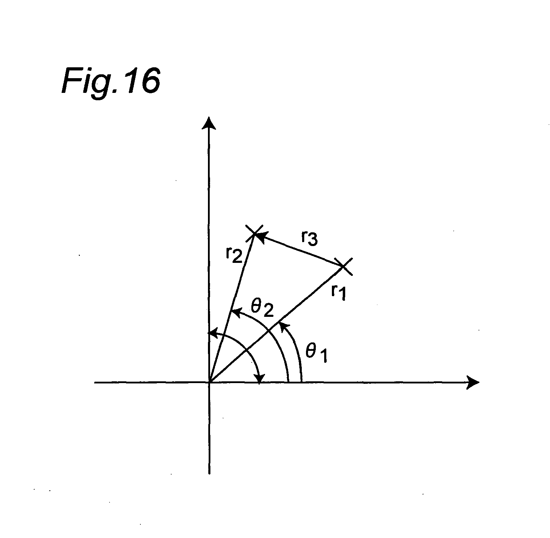

Fig. 16 illustrates that a vector of dimension parameter 1 and a vector of dimension parameter 2 are summed to produce a vector of dimension parameter 3. In typical 4-phase tuning, each direction of each vector is evenly distributed in the same range of 90 degree. The magnitude of the dimension parameter 3 can be represented by the dimension parameters 1 and 2 and the angle (θ2-θ1) using the cosine formula of trigonometric function. Hence, the n-th moment of the dimension parameter 3 can also be represented by the dimension parameters 1 and 2 and the angles θ1 and θ2 and the probability distribution thereof. Then, by integrating it with respect to the angles θ1 and θ2, the n-th moment of the dimension parameter 3 can be represented by only the n-th moments of the dimension parameters 1 and 2.

The two n-th moments of angle parameters are also synthesized in consideration of an angle between the two angle parameters using the above-described method.

Thus, both of the n-th moment of the paired axial misalignment and the n-th moment of the paired orientation error can be calculated.

Next, returning to Fig. 14, from the n-th moment of the tuned and paired axial misalignment, the n-th moment of connection loss due to axial misalignment is calculated by Equation 3. Further, from the n-th moment of the paired orientation error, the n-th moment of connection loss due to orientation error is calculated by Equation 5.

The n-th moment of the total connection loss can be calculated by summing the n-th moment of connection loss due to axial misalignment, the n-th moment of connection loss due to orientation error, and the n-th moment of connection loss of the split sleeve. In a case of given data being distribution of dimension or angle parameter rather than distribution of connection loss of the split sleeve, the n-th moment thereof can be calculated by transforming it into distribution of connection loss using Equation 3 or 5. Specifically, an example of the 1st moment, i.e., average will be discussed below. In a case of each connection loss containing a different factor being sufficiently low, it is enough to sum up each connection loss due to each factor. Hence, the total connection loss means the sum of connection loss due to axial misalignment, connection loss due to orientation error, and connection loss of the split sleeve. In other words, the total connection loss IL can be represented by the following equation, using the connection loss $IL_\Delta$ due to axial misalignment, the connection loss $IL_\theta$ due to orientation error, and the connection loss $IL_s$ of the split sleeve.

$$\text{(Equation 17)}$$

$$IL = IL_\Delta + IL_\theta + IL_{sl}$$

Incidentally, each connection loss is non-negative. The respective 1st moments, i.e., averages, are expressed as $<IL_\Delta>$; $<IL_\theta>$; $<IL_{s1}>$; $<IL>$, respectively. Since each connection loss due to axial misalignment, orientation error and the split sleeve is independent mutually, the 1st moment, i.e., average of the total connection loss can be represented by the following equation.

$$\text{(Equation 18)}$$

$$<IL> = <IL_\Delta> + <IL_\theta> + <IL_{sl}>$$

The number of data of dimension parameters used for the present invention is preferably at least 10, more preferably 100 or more, because the more data can form smoother probability distribution in histogram of dimension parameter.

Further, resolution of data of dimension parameters is preferably 0.1 $\mu$m or below, more preferably 0.05 $\mu$m or below, because smaller resolution of data can calculate the n-th moment with higher precision.

In the above-described embodiment, connection loss is calculated using both of axial misalignment and orientation error. For example, in a case of orientation error being very smaller than axial misalignment, connection loss can be calculated using only axial misalignment. In adverse case, it can be calculated using only orientation error.

While introducing alignment technique for matching a misaligned direction with a particular direction to reduce connection loss of optical connectors, the method for estimating connection loss of an optical connector, according to the present invention, may be employed.

The present invention can provide a simulation software by using the above-described method for estimating connection loss of an optical connector.

It is preferable to use the integrated spreadsheet software "Excel" for personal computer because of convenient, low-cost and common means. Otherwise, BASIC, FORTRAN, or C language may be used, thereby attaining the same performance as the present invention.

The method for estimating connection loss of an optical connector, and the simulator using the same, according to the present invention, can be applied to not only a single-mode optical fiber but also a multi-mode optical fiber.

A specific example will be described below.

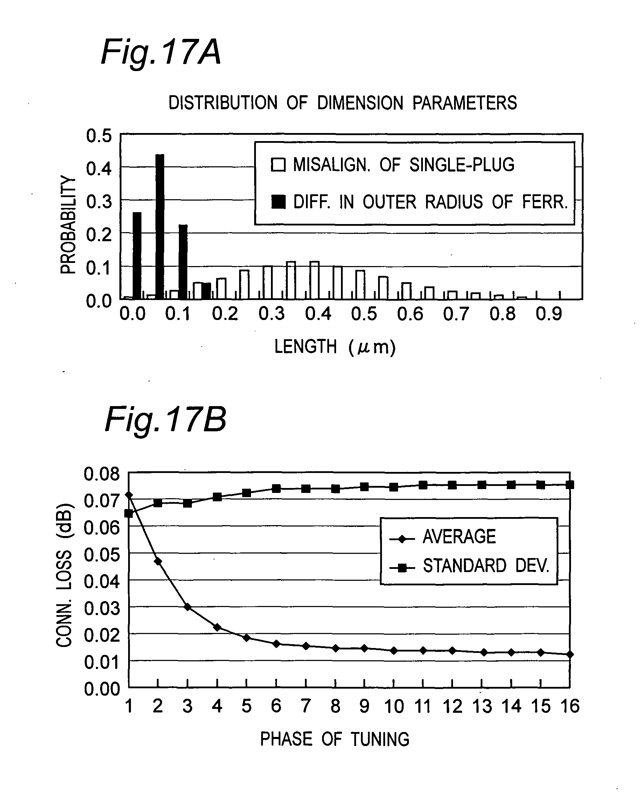

By using the simulator for estimating connection loss of an optical connector, according to the present invention, as shown in Fig. 14, simulation was performed using distribution data with inner diameter of ferrule of $\varphi$125.2 to 125.7 $\mu$m, coaxiality of 0 to 0.8 $\mu$m, outer diameter of $\varphi$2.4989 to 2.4992 mm, orientation error of 0.02 to 0.14 degree, and coaxiality of optical fiber of 0 to 0.4 $\mu$m, outer diameter of 124.8 to 125.3 $\mu$m. Fig. 17A illustrates distribution of axial misalignment of single-plugs and distribution of difference in outer diameter of ferrules, which are calculated based on the dimension data. Here, distribution of difference in outer radius of ferrules means distribution of difference in outer radius of ferrules with two plugs paired, which can be calculated from the distribution of difference in outer diameter of ferrules. The average and the standard deviation of connection loss are shown in Fig. 17B.

Next, as a comparative example, another simulator was performed. The resulting connection loss exhibited the average of 0.07 dB in a case of no tuning. In another case of tuning infinitely, it exhibited 0.01 dB because each axial misalignment of the paired plugs is in the same direction.

As described above, it was verified that the method for simulating distribution of connection loss, according to the present invention, by calculating each axial misalignment based on distribution data of dimension parameters of both of a ferrule and an optical fiber, and orientation error based on distribution data of angle parameters of the ferrule, and then calculating the sum of the axial misalignments and/or the orientation errors in terms of vector quantity in a plane perpendicular to an axial direction of the optical fiber and the ferrule, and then calculating the n-th moments of axial misalignment and orientation error in a connection state, and then calculating the n-th moment of connection loss based thereon, could attain the approximately same values as in a method using another simulator.

In addition, time requirement of the present invention was several tens of minutes including data inputting, while time requirement of practical measurement in the comparative example was several tens of hours including sample manufacturing, measurement, and data compiling. The present invention could easily attain distribution data of connection loss in no need of a large number of man-hours and costs.

[INDUSTRIAL APPLICABILITY]

The present invention can provide valuable techniques in light of estimating by simulation distribution data of connection loss of optical connectors used for optical communications.

**Claims**

1. A method for estimating connection loss of an optical connector including a ferrule, which has a through-hole along the longitudinal direction, and an optical fiber which is inserted and fixed into the ferrule, comprising steps of:

   calculating axial misalignment based on both of at least distribution data of dimension parameters of the ferrule and at least distribution data of dimension parameters of the optical fiber;
   calculating connection loss based on the axial misalignment; and
   simulating distribution of the connection loss.

2. The method for estimating connection loss of an optical connector, according to Claim 1, wherein the distribution of the connection loss is simulated by randomly extracting particular data out of both of at least distribution data of dimension parameters of the ferrule and at least distribution data of dimension parameters of the optical fiber, and then calculating the axial misalignment based on combination thereof, and then calculating connection loss based on the axial misalignment to obtain a plurality of connection loss data.

3. The method for estimating connection loss of an optical connector, according to Claim 1, wherein, in the method for estimating connection loss, distribution data of angle parameters, which represents orientation error of the through-hole of the ferrule with respect to an outer surface thereof, reside in the combination.

4. The method for estimating connection loss of an optical connector, according to Claim 3, wherein distribution data of either dimension parameters or angle parameters of a split sleeve, or distribution data of connection loss of a split sleeve reside in the combination.

5. The method for estimating connection loss of an optical connector, according to Claim 4, wherein the axial misalignment is calculated based on clearance caused between an inner diameter of the ferrule and an outer diameter of the optical fiber, and coaxiality between the outer surface and the through-hole of the ferrule, and coaxiality between a core and a clad of the optical fiber.

**6.** The method for estimating connection loss of an optical connector, according to Claim 5, wherein the distribution of the connection loss is simulated by calculating the axial misalignment as single-plug axial misalignment, based on clearance caused between an inner diameter of the ferrule and an outer diameter of the optical fiber, and coaxiality between the outer surface and the through-hole of the ferrule, and coaxiality between a core and a clad of the optical fiber, and then calculating paired axial misalignment using two data of the single-plug axial misalignment with axial misalignment due to a difference in outer diameter of the ferrule, and then calculating connection loss based on the paired axial misalignment.

**7.** The method for estimating connection loss of an optical connector, according to Claim 6, wherein the distribution of the connection loss is simulated by obtaining the total connection loss that is the sum of the connection loss calculated based on the paired axial misalignment, connection loss calculated based on paired orientation error, and the connection loss of the split sleeve.

**8.** The method for estimating connection loss of an optical connector, according to Claim 1, wherein the distribution of the connection loss is calculated by calculating orientation error based on distribution data of angle parameters of the ferrule; calculating the sum of the orientation errors in terms of vector quantity in a plane perpendicular to an axial direction of the optical fiber and the ferrule; and calculating distribution of axial misalignment and/or orientation error in a connection state.

**9.** The method for estimating connection loss of an optical connector, according to Claim 8, wherein, when the distribution of axial misalignment resulting from both of distribution data of dimension parameters of the ferrule and distribution data of dimension parameters of the optical fiber, and/or the distribution of orientation error resulting from distribution data of angle parameters of the ferrule are summed in terms of vector, an angle between two vectors of misalignment or orientation error to be summed is variable-transformed into a magnitude of a summed vector of misalignment or orientation error.

**10.** The method for estimating connection loss of an optical connector, according to Claim 8, wherein the distribution of the connection loss is calculated by calculating distribution of single-plug axial misalignment by summing in terms of vector distribution of clearance caused between an inner diameter of the ferrule and an outer diameter of the optical fiber, distribution of coaxiality between the outer surface and the through-hole of the ferrule, and distribution of coaxiality between a core and a clad of the optical fiber, and then calculating paired distribution of axial misalignment by summing in terms of vector two distribution of the single-plug axial misalignment with distribution of difference in outer diameter of the ferrule, and then calculating distribution of connection loss based on the paired distribution of axial misalignment.

**11.** The method for estimating connection loss of an optical connector, according to Claim 8, wherein the orientation error is calculated based on a tilt of the longitudinal direction of the through-hole of the ferrule to the outer surface thereof.

**12.** The method for estimating connection loss of an optical connector, according to Claim 8, wherein the distribution of connection loss is calculated based on the paired distribution of orientation error which is calculated by summing in terms of vector two distribution of orientation error of the ferrule.

**13.** The method for estimating connection loss of an optical connector, according to Claim 10, wherein the distribution of the connection loss is calculated by obtaining the total connection loss that is the sum of the connection loss calculated based on the paired axial misalignment, connection loss calculated based on paired orientation error, and the connection loss of the split sleeve.

**14.** The method for estimating connection loss of an optical connector, according to Claim 1, wherein the n-th moment of connection loss is calculated by calculating orientation error based on distribution data of angle parameters of the ferrule; calculating the sum of the orientation errors in terms of vector quantity in a plane perpendicular to an axial direction of the optical fiber and the ferrule; and calculating the n-th moment of axial misalignment and/or orientation error in a connection state.

**15.** The method for estimating connection loss of an optical connector, according to Claim 14, wherein an average is calculated based on the 1st moment of connection loss, and a standard deviation or a variance is calculated based on the 1st and 2nd moments of connection loss.

**16.** The method for estimating connection loss of an optical connector, according to Claim 14, wherein the n-th moment of the connection loss is calculated by calculating the n-th moment of single-plug axial misalignment by summing in terms of vector the n-th moment of clearance caused between an inner diameter of the ferrule and an outer diameter of the optical fiber, the n-th moment of coaxiality between the outer surface and the through-hole of the ferrule, and the n-th moment of coaxiality between a core and a clad of the optical fiber, and then calculating the paired n-th moment of axial misalignment by summing in terms of vector the two n-th moments of the single-plug axial misalignment with the n-th moment of difference in outer diameter of the ferrule, and then calculating the n-th moment of connection loss based on the paired n-th moment of axial misalignment.

**17.** The method for estimating connection loss of an optical connector, according to Claim 14, wherein the orientation error is calculated based on a tilt of the longitudinal direction of the through-hole of the ferrule to the outer surface thereof.

**18.** The method for estimating connection loss of an optical connector, according to Claim 14, wherein the n-th moment of connection loss is calculated based on the paired n-th moment of orientation error which is calculated by summing in terms of vector the two n-th moments of orientation error of the ferrule.

**19.** The method for estimating connection loss of an optical connector, according to Claim 16, wherein the n-th moment of the connection loss is calculated by obtaining total connection loss that is the sum of the connection loss calculated based on the paired axial misalignment, connection loss calculated based on paired orientation error, and the connection loss of the split sleeve.

**20.** The method for estimating connection loss of an optical connector, according to Claim 1, wherein the n-th moment of connection loss is calculated by performing tuning, that is a method for aligning a misaligned direction of a single plug including the ferrule and the optical fiber, based on both of distribution data of axial misalignment of the single plug, and distribution data of a diameter of the ferrule; and calculating the n-th moment of axial misalignment in the tuned connection state.

**21.** The method for estimating connection loss of an optical connector, according to Claim 20, wherein an average is calculated based on the 1st moment of connection loss, and a standard deviation or a variance is calculated based on the 1st and 2nd moments of connection loss.

**22.** The method for estimating connection loss of an optical connector, according to Claim 20, wherein the orientation error is calculated based on a tilt of the longitudinal direction of the through-hole of the ferrule to the outer surface thereof.

**23.** The method for estimating connection loss of an optical connector, according to Claim 20, wherein the n-th moment of connection loss is calculated based on the paired n-th moment of orientation error which is calculated by summing in terms of vector the two n-th moments of orientation error of the ferrule.

**24.** The method for estimating connection loss of an optical connector, according to Claim 20, wherein the n-th moment of the connection loss is calculated by obtaining the total connection loss that is the sum of the connection loss calculated based on the paired axial misalignment, connection loss calculated based on paired orientation error, and the connection loss of the split sleeve.

**25.** A simulator for estimating connection loss of an optical connector, comprising: the method for estimating connection loss of an optical connector, according to Claim 1.

# Fig.1

| DIST. DATA OF OUTER DIAM. OF FERR. | DIST. DATA OF ORIENT. ERR. OF FERR. | DIST. DATA OF CONN. LOSS OF SPLIT SLV. |

DIST. DATA OF OUTER DIAM. OF OPT-FIB. — DATA EXTRACTING

DIST. DATA OF INNER DIAM. OF FERR. — DATA EXTRACTING

CLEARANCE

MISALIGN. OF SINGLE-PLUG

DIST. DATA OF COAX. OF FERR. — DATA EXTRACTING

DIST. DATA OF COAX. OF CORE OF OPT-FIB. — DATA EXTRACTING

DATA EXTRACTING

DATA EXTRACTING

DATA EXTRACTING

SINGLE-PLUG

PAIRED AXIAL MISALIGN.

PAIRED ORIENT. ERR.

CONN. LOSS

CONN. LOSS

CONN. LOSS

TOTAL CONN. LOSS

SIMULATING A NUMBER OF DATA

DIST. DATA OF CONNE. LOSS

## Fig.2A

## Fig.2B

*Fig.3A*

*Fig.3B*

*Fig.4A*

*Fig.4B*

# Fig.5

| DATA No. | DATA |
|:---:|:---:|
| 1 | X1 |
| 2 | X2 |
| 3 | X3 |
| 4 | X4 |
| • | • |
| • | • |
| • | • |
| i | Xi |
| • | • |
| • | • |
| n | Xn |

EXTRACTING ONE DATUM BY GENERATING RANDOM NUMBER

# Fig.6

$\delta\,°$

EXTRACTING ANGLE DATA BY
GENERATING RANDOM NUMBER

*Fig.7*

| SAMPLE No. | 1 | 2 | 3 | · | · | i | · | · | n−1 | n |
|---|---|---|---|---|---|---|---|---|---|---|
| 1 | — | — | — | — | — | — | — | — | — | — |
| 2 | X12 | — | — | — | — | — | — | — | — | — |
| 3 | X13 | X23 | — | — | — | — | — | — | — | — |
| · | · | · | · | — | — | — | — | — | — | — |
| · | · | · | · | · | — | — | — | — | — | — |
| i | X1i | X2i | X3i | · | · | — | — | — | — | — |
| · | · | · | · | · | · | · | — | — | — | — |
| · | · | · | · | · | · | · | · | — | — | — |
| n−1 | · | · | · | · | · | Xin−1 | · | · | — | — |
| n | X1n | X2n | X3n | · | · | Xin | · | · | Xn−1n | — |

| AVE. | Xavr |
|---|---|
| DEV. | σ |
| MAX. | Xmax |

## *Fig.8*

## Fig.9

*Fig.10*

*Fig.11*

## *Fig.12*

## Fig.13

# Fig.14

## Fig.15A

## Fig.15B

*Fig.16*

## Fig.17A

DISTRIBUTION OF DIMENSION PARAMETERS

Legend:
□ MISALIGN. OF SINGLE-PLUG
■ DIFF. IN OUTER RADIUS OF FERR.

PROBABILITY (y-axis): 0.0, 0.1, 0.2, 0.3, 0.4, 0.5
LENGTH ($\mu$m) (x-axis): 0.0, 0.1, 0.2, 0.3, 0.4, 0.5, 0.6, 0.7, 0.8, 0.9

## Fig.17B

Legend:
◆ AVERAGE
■ STANDARD DEV.

CONN. LOSS (dB) (y-axis): 0.00, 0.01, 0.02, 0.03, 0.04, 0.05, 0.06, 0.07, 0.08
PHASE OF TUNING (x-axis): 1 2 3 4 5 6 7 8 9 10 11 12 13 14 15 16

## Fig.18

## Fig.19

## Fig.20A

## Fig.20B

## Fig.21

**INTERNATIONAL SEARCH REPORT**

| International application No. |
| --- |
| PCT/JP2004/011324 |

A. CLASSIFICATION OF SUBJECT MATTER
Int.Cl⁷ G02B6/36

According to International Patent Classification (IPC) or to both national classification and IPC

B. FIELDS SEARCHED

Minimum documentation searched (classification system followed by classification symbols)
Int.Cl⁷ G02B6/36, G05B23/00-23/02, G06G3/10, G06F17/50

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JICST(JOIS)

C. DOCUMENTS CONSIDERED TO BE RELEVANT

| Category* | Citation of document, with indication, where appropriate, of the relevant passages | Relevant to claim No. |
| --- | --- | --- |
| X | Yasuhiro ANDO et al., 'Statistical Analysis on | 1-7 |
| A | Connection Characteristics of Optical Fiber | 8-25 |
| | Connectors.' IEICE Trans.Electron, 1994, Vol. | |
| | E77-C, No.12, pages 1970 to 1982 | |
| | | |
| A | Vokey, 'Statistical Modeling of Mechanical | 1-25 |
| | Splice and Connector Losses for Optical | |
| | Fibers.' International Wire & Cable Symposium | |
| | Proceedings, 1984, pages 76 to 81 | |

☐ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 November, 2004 (19.11.04) | 07 December, 2004 (07.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)